(19)

**Europäisches Patentamt**

**European Patent Office**

**Office européen des brevets**

(11) **EP 4 579 979 A1**

(12) **EUROPÄISCHE PATENTANMELDUNG**

(43) Veröffentlichungstag:
    **02.07.2025 Patentblatt 2025/27**

(21) Anmeldenummer: **23220516.1**

(22) Anmeldetag: **28.12.2023**

(51) Internationale Patentklassifikation (IPC):
    **H02J 3/24** (2006.01)    **F03D 7/04** (2006.01)
    **H02J 3/38** (2006.01)    **F03D 7/02** (2006.01)

(52) Gemeinsame Patentklassifikation (CPC):
    **H02J 3/241; F03D 7/048; H02J 3/381;** F03D 7/0284

(84) Benannte Vertragsstaaten:
    **AL AT BE BG CH CY CZ DE DK EE ES FI FR GB GR HR HU IE IS IT LI LT LU LV MC ME MK MT NL NO PL PT RO RS SE SI SK SM TR**
    Benannte Erstreckungsstaaten:
    **BA**
    Benannte Validierungsstaaten:
    **KH MA MD TN**

(71) Anmelder: **Wobben Properties GmbH**
    **26607 Aurich (DE)**

(72) Erfinder:
    • **Malekian Boroujeni, Kaveh**
      **28201 Bremen (DE)**
    • **Busker, Kai**
      **26629 Großefehn (DE)**

(74) Vertreter: **Eisenführ Speiser**
    **Patentanwälte Rechtsanwälte PartGmbB**
    **Postfach 10 60 78**
    **28060 Bremen (DE)**

(54) **VERFAHREN ZUM EINSPEISEN ELEKTRISCHER LEISTUNG IN EIN ELEKTRISCHES VERSORGUNGSNETZ MITTELS EINER WINDENERGIEANLAGE**

(57) Die Erfindung betrifft ein Verfahren zum Einspeisen elektrischer Leistung in ein eine Netzspannung mit einer Netzfrequenz aufweisendes elektrisches Versorgungsnetz, mittels einer Einspeiseeinheit, insbesondere mittels einer Windenergieanlage oder eines Windparks, umfassend die Schritte Erfassen der Netzfrequenz und weitergeben der erfassten Netzfrequenz als Frequenzmesssignal, Filtern des Frequenzmesssignals mittels einer Filtereinrichtung mit Tiefpassverhalten in ein Frequenzfiltersignal, Bestimmen eines frequenzabhängigen Leistungssollwertanteils in Abhängigkeit von dem Frequenzfiltersignal, und Einspeisen elektrischer Leistung in Abhängigkeit von dem frequenzabhängigen Leistungssollwertanteil, wobei zum Filtern des Frequenzmesssignals mittels der Filtereinrichtung mit Tiefpassverhalten wenigstens eine erste und eine zweite Filterfunktion mit Tiefpassverhalten mit charakteristischer erster bzw. zweiter Tiefpasszeitkonstanten verwendet werden, und zwischen der ersten und zweiten Filterfunktion ganz oder teilweise gewechselt werden kann, insbesondere mittels eines ersten und/oder zweiten Gewichtungsfaktors.

Fig. 7

EP 4 579 979 A1

**Beschreibung**

Die vorliegende Erfindung betrifft ein Verfahren zum Einspeisen elektrischer Leistung in ein elektrisches Versorgungsnetz mittels einer Einspeiseeinheit, insbesondere mittels einer Windenergieanlage oder eines Windparks. Die Erfindung betrifft außerdem eine entsprechende Einspeiseeinheit, insbesondere eine entsprechende Windenergieanlage oder einen entsprechenden Windpark.

Windenergieanlagen sind bekannt, sie erzeugen elektrische Leistung aus Wind und speisen diese in ein elektrisches Versorgungsnetz ein. Neben der Bereitstellung der Energie kommt Windenergieanlagen dabei häufig auch eine Aufgabe zur Netzstützung bei. Zumindest sollten Windenergieanlagen möglichst netzstützend arbeiten.

Bei umrichterbasierten Einspeisetechnologien, die auch Typ-2-Anlagen genannt werden, die netzfolgend bzw. netzstützend arbeiten, wird der Beitrag zur Frequenzstabilität dadurch realisiert, dass zuerst die Frequenz ermittelt wird und basierend darauf ein Wirkleistungssollwert durch einen Regler und eine P(f)-Charakteristik bestimmt wird. Dieser Wirkleistungssollwert wird dann an ein Wirkleistungsregelungssystem der Windenergieanlage, die insoweit als Aktuator wirkt, weitergegeben und realisiert.

Hierbei ist zu beachten, dass an verschiedenen Stellen einer solchen Regelstrecke Verzögerungen sowie Glieder mit einer eingeschränkten Dynamik existieren. Besonders kann der Wirkleistungssollwert in einer zentralen Parksteuereinheit berechnet werden, die dabei eine Verzögerung in der Frequenzbestimmung aufweist, weil sie beispielsweise eine diskrete Fourier-Transformation (DFT) verwendet, und auch der Regler, der den Wirkleistungssollwert aus der Frequenz bestimmt, kann eine Dynamik aufweisen. Weiterhin kann die Kommunikation zwischen der zentralen Parksteuereinheit und der Windenergieanlage, an die der Wirkleistungssollwert übergeben wird, eine Verzögerung beinhalten. Weitere Verzögerungen können an der Windenergieanlage auftreten, zum einen durch einen verzögerten Empfang des von der zentralen Parksteuereinheit übermittelten Signals, und zum anderen aufgrund der Dynamik der Wirkleistungssteuerung.

Diese Verzögerungen und einschränkende Dynamik führen zu einer verzögerten Wirkleistungsreaktion auf eine Frequenzstörung. In Netzen mit hohem Anteil von netzfolgenden bzw. netzstützenden Einspeisetechnologien wird diese Wirkleistungsreaktion den Frequenzverlauf am Netz beeinflussen. Damit ergibt sich ein geschlossener Regelkreis, weil die so beeinflusste Frequenz im Netz wieder zurückgeführt, erfasst und in der zentralen Parksteuerung für einen frequenzabhängigen Wirkleistungssollwert verwendet wird. Dadurch können solche verzögerten Wirkleistungsreaktionen in schwach gedämpften Netzen Frequenzoszillationen hervorrufen. Ein schwach gedämpftes Netz ist dabei eines, in dem eine Frequenzschwingung nicht asymptotisch abklingt. Insbesondere ist ein schwach gedämpftes Netz eines, bei dem ein Frequenzsprung mit wenigstens einem Überschwinger abklingt, wohingegen ein stark gedämpftes Netz eines ist, bei dem bei einem Frequenzsprung kein Überschwinger der Frequenz auftritt.

Es kann hinzukommen, dass existierende Einspeiser, insbesondere Windenergieanlagen, für eine solche frequenzabhängige Wirkleistungseinspeisung kein oder kein signifikantes Dämpfungsverhalten aufweisen.

In einem solchen Signalfluss kann ein Tiefpassfilter vorgesehen sein, um eine Frequenzänderung zu filtern, bevor in Abhängigkeit von der Frequenz und damit einer geänderten Frequenz ein Wirkleistungssollwert vorgegeben wird. Ein solcher Tiefpassfilter kann im Falle eines Netzfehlers aber unerwünscht sein, da er zu einer zu großen Verzögerung führen kann.

Der vorliegenden Erfindung liegt somit die Aufgabe zugrunde, zumindest eines der oben genannten Probleme zu adressieren. Insbesondere soll eine Lösung vorgeschlagen werden, bei der bei der Vorgabe einer frequenzabhängigen Wirkleistung zum Einspeisen in das elektrische Versorgungsnetz eine Schwingungsanregung auch bei schwach gedämpften elektrischen Versorgungsnetzen vermieden wird, während gleichzeitig eine schnelle Reaktion auf ein Frequenzereignis ermöglicht wird, besonders auf einen Netzfehler. Zumindest soll zu bisher bekannten Lösungen eine Alternative vorgeschlagen werden.

Erfindungsgemäß wird ein Verfahren gemäß Anspruch 1 vorgeschlagen. Ein solches Verfahren betrifft somit das Einspeisen elektrischer Leistung in ein elektrisches Versorgungsnetz, das eine Netzspannung mit einer Netzfrequenz aufweist. Das Einspeisen erfolgt mittels einer Einspeiseeinheit, insbesondere mittels einer Windenergieanlage oder eines Windparks. Dazu wird die Netzfrequenz erfasst und als Frequenzmesssignal weitergegeben. Das Frequenzmesssignal wird mittels einer Filtereinrichtung mit Tiefpassverhalten in ein Frequenzfiltersignal gefiltert und abhängig von diesem Frequenzfiltersignal wird ein frequenzabhängiger Leistungssollwertanteil bestimmt.

Es wird also ein frequenzabhängiger Leistungsanteil bestimmt, der entsprechend auch eingespeist werden soll. Dabei kommt insbesondere in Betracht, dass ein weiterer Wirkleistungsanteil unabhängig von der Frequenz vorgegeben wird, insbesondere in Abhängigkeit von einer verfügbaren Leistung, im Falle einer Windenergieanlage oder eines Windparks also in Abhängigkeit von verfügbarer Windleistung, oder gemäß einer Vorgabe. Dieser Anteil kann auch abschnittsweise konstant sein, besonders dann, wenn die zugrundeliegende Primärenergie, wie in dem genannten Beispiel die Windenergie, das zulässt. Auf diesen Wirkleistungsanteil, der nicht von der/einer Frequenz abhängt und auch als Wirkleistungsgrundanteil bezeichnet werden kann, wird dieser frequenzabhängige Leistungssollwertanteil aufaddiert. Das Ergebnis ist dann ein Wirkleistungssollwert der insgesamt einzuspeisenden Wirkleistung.

Insoweit wird dann elektrische Leistung in Abhängigkeit von dem frequenzabhängigen Leistungssollwertanteil eingespeist, nämlich zusammen mit der Leistung, die nicht von der Frequenz abhängt und als Leistungsgrundanteil hinzukommt.

Zum Filtern des Frequenzmesssignals mittels der Filtereinrichtung mit Tiefpassverhalten werden wenigstens eine erste und eine zweite Filterfunktion mit Tiefpassverhalten mit charakteristischer erster bzw. zweiter Tiefpasszeitkonstante verwendet. Die Filtereinrichtung weist also wenigstens zwei Filterfunktionen auf, die sich in ihrer Tiefpasszeitkonstante unterscheiden. Beide Filterfunktionen, oder gegebenenfalls noch mehrere, weisen also Tiefpassverhalten auf, filtern also hohe Frequenzen heraus, sind aber - vereinfacht ausgedrückt - unterschiedlich schnell.

Dazu ist vorgesehen, dass zwischen der ersten und zweiten Filterfunktion, gegebenenfalls zwischen noch weiteren Filterfunktionen, ganz oder teilweise gewechselt werden kann. Das kann insbesondere mittels eines ersten und/oder zweiten Gewichtungsfaktors erfolgen.

Im Grunde kann dies so realisiert sein, dass diese beiden Filterfunktionen, um bei dieser einfachsten Variante zu bleiben, im Grunde parallel arbeiten. Beide Filterfunktionen filtern also das Frequenzmesssignal und können jeweils ein gefiltertes Messsignal ausgeben, das somit unterschiedlich gefiltert wurde. Damit liegen nicht nur zwei unterschiedlich gefilterte Frequenzsignale vor, sondern es liegen dadurch auch zwei unterschiedliche Verzögerungen vor. Vereinfacht ausgedrückt ist das gefilterte Frequenzsignal, das mit der Filterfunktion mit größerer Tiefpasszeitkonstante gefiltert wurde, stärker verzögert, also quasi langsamer, als das andere gefilterte Frequenzsignal.

Nun liegen zwei gefilterte Frequenzsignale vor, die wieder überlagert werden können. Es ist aber vorgesehen, vor der Überlagerung diese zu gewichten. Im einfachsten Fall kann der eine Gewichtungsfaktor den Wert 0 und der andere den Wert 1 aufweisen. In diesem Fall wird nur das eine der beiden gefilterten Frequenzsignale weitergegeben. Diese beiden Gewichtungsfaktoren können aber ihren Wert verändern und im anderen Extremfall ist dann der erste Gewichtungsfaktor 1 und der zweite 0. In dem Fall wird nicht mehr das erste, sondern das zweite gefilterte Frequenzsignal weitergeleitet.

Durch diese Gewichtungsfaktoren können aber beide gefilterten Frequenzsignale kombiniert werden. Besonders ist es möglich, durch eine kontinuierliche Anhebung des einen Gewichtungsfaktors und kontinuierliche Absenkung des anderen Gewichtungsfaktors einen Übergang vom einen gefilterten Frequenzsignal zum anderen gefilterten Frequenzsignal herzustellen.

Besonders kann vorgesehen sein, dass durch die Gewichtungsfaktoren im Normalfall nur die Filterfunktion mit dem schnelleren Tiefpassverhalten aktiv ist, also mit der kleineren Zeitkonstanten. Tritt ein Fehler auf, kann auf diesen dann schnell reagiert werden. Die schnelle Filterfunktion bleibt also zunächst aktiv, wird dann aber durch die langsame Filterfunktion abgelöst. Dadurch wird sichergestellt, dass eine mögliche Schwingungsanregung durch diesen Netzfehlerfall durch die langsamere Filterfunktion eher gedämpft wird, zumindest, dass verhindert wird, dass diese zu einem Aufschwingen führt.

Hat sich die Situation stabilisiert, kann wieder zurück zu der schnellen Filterfunktion gewechselt werden, denn es könnte ein neuer Fehler auftreten, auf den schnell reagiert werden soll.

Mit einem solchen Verhalten kann zudem auch eine Netzvorschrift erfüllt werden, die eine schnelle Reaktion bei einem Netzfehler fordert.

Grundsätzlich sind wenigstens zwei Gewichtungsfaktoren vorgesehen, nämlich einer für jede Filterfunktion. Es kann aber ausreichen, wenn ein einziger Gewichtungsfaktor verwendet wird, wenn für die eine Filterfunktion dieser Gewichtungsfaktor unmittelbar angewendet wird und für die andere Filterfunktion dieser dadurch angewendet wird, dass er zunächst von 1 abgezogen wird.

Gemäß einem Aspekt wird vorgeschlagen, dass die erste und zweite Filterfunktion zueinander parallel arbeiten, mit dem ersten bzw. zweiten Gewichtungsfaktor gewichtet werden und durch Veränderung der Gewichtungsfaktoren zwischen den Filterfunktionen gewechselt werden kann. Durch diesen Aspekt wird somit das oben schon beschriebene Prinzip realisiert. Über die beiden Gewichtungsfaktoren kann also die Grundeinstellung eines schnellen Tiefpassfilters bzw. einer schnellen Tiefpassfilterfunktion realisiert werden.

Dieser schnelle Tiefpassfilter kann also dauerhaft bereitgestellt werden. Im Fehlerfall kann durch Verstellen der Gewichtungsfaktoren, indem der eine insbesondere von 1 auf 0 abgesenkt und der andere von 0 auf 1 angehoben wird, zur anderen Filterfunktion gewechselt werden. Später, wenn sich das Netz beruhigt hat, kann wieder zurückgewechselt werden, indem der eine Gewichtungsfaktor wieder auf 1 gestellt und der andere auf 0 gestellt wird.

Dieses Verstellen kann insbesondere kontinuierlich und koordiniert erfolgen. Besonders kann es durch entsprechende Rampen erfolgen. Vorzugsweise werden die beiden Gewichtungsfaktoren, wenn sie grundsätzlich zwischen 0 und 1 wechseln, so gewählt und so verändert, dass ihre Summe immer 1 ist. Dadurch wird vermieden, dass durch die Gewichtungsfaktoren die Amplitude des Frequenzfiltersignals verändert wird.

Es wird insoweit nämlich vorgeschlagen, dass das Frequenzfiltersignal die Überlagerung der beiden gewichteten Ausgänge der beiden Filterfunktionen ist. Die Ausgänge der beiden Filterfunktionen können also nach dem Gewichtungsfaktor aufaddiert werden.

Gemäß einem Aspekt wird vorgeschlagen, dass die erste und zweite Filterfunktion das Frequenzmesssignal in ein erstes bzw. zweites Filtersignal filtern und das erste und zweite Filtersignal mit dem ersten bzw. zweiten Gewichtungsfaktor gewichtet zu dem Frequenzfiltersignal, oder einem Teil davon, aufaddiert werden, wobei der erste und zweite Gewichtungsfaktor veränderbar sind.

Hierdurch kann die bereits erläuterte Funktionalität realisiert werden. Die beiden Filterfunktionen arbeiten parallel, sodass aus dem erfassten Frequenzsignal zwei Teilfiltersignale herauskommen. Diese weisen die genannten unterschiedlichen Eigenschaften auf, insbesondere ist das eine Teilfiltersignal schneller als das andere bzw. ist in dem einen Filtersignal schneller eine Frequenzänderung, insbesondere Frequenzstörung, zu erkennen als in dem anderen.

Die beiden Teilfiltersignale können dann aufeinander aufaddiert werden, was auch als Überlagerung betrachtet werden kann, wobei durch die beiden Gewichtungsfaktoren zum einen realisiert wird, dass die jeweils gewünschte Filterfunktion wirkt oder vorliegt. Zum anderen wird erreicht, dass sichergestellt wird, dass die überlagerten, also aufaddierten beiden Teilfiltersignale nach der Gewichtung mit ihrem jeweiligen Gewichtungsfaktor zur gleichen Amplitude führen, die das Frequenzmesssignal vor dem Filtern hatte bzw. die das Frequenzmesssignal nach einem der beiden Filter ohne Gewichtungsfaktor bzw. Gewichtungsfaktor mit dem Wert 1 hätte.

Gemäß einem Aspekt wird vorgeschlagen, dass der erste und der zweite Gewichtungsfaktor zum Gewichten der ersten bzw. zweiten Filterfunktion nur so verändert werden, dass ihre Summe konstant bleibt, insbesondere 1 ist. Dadurch kann, wie vorstehend schon erläutert, erreicht werden, dass das Frequenzfiltersignal, das sich aus dem ersten und zweiten Teilfiltersignal durch Addition zusammensetzt, durch Veränderung der Gewichtungsfaktoren nicht in seiner Amplitude beeinflusst wird. Ist die Summe der beiden Gewichtungsfaktoren 1, bleibt die Amplitude des Frequenzfiltersignals im Grunde gleich, verhält sich also so, als würde nur ein Tiefpassfilter ohne Gewichtungsfaktor verwendet werden.

Gemäß einem Aspekt wird vorgeschlagen, dass die zweite Tiefpasszeitkonstante in Abhängigkeit von einer Systemeigenfrequenz des mit der Einspeiseeinheit gekoppelten elektrischen Versorgungsnetzes gewählt wird, insbesondere so, dass die zweite Tiefpasszeitkonstante größer gewählt wird als ein Kehrwert der Systemeigenfrequenz.

Es wird somit vorgeschlagen, eine solche Systemeigenfrequenz zu berücksichtigen und sie insbesondere dafür zu erfassen. Eine solche Systemeigenfrequenz ist somit eine Eigenfrequenz des mit der Einspeiseeinheit gekoppelten elektrischen Versorgungsnetzes. Dafür wird besonders vorgeschlagen, für die Regelung der frequenzabhängigen Wirkleistung bzw. Wirkleistungsvorgabe zunächst keinen oder einen festen, vorbestimmten Filter zu verwenden.

Die Eigenfrequenz kann durch eine Systemanregung identifiziert werden, besonders durch eine Sprungantwort. Dafür kann einer Windenergieanlage ein Sprung in der Leistung vorgegeben werden und dann die Reaktion der Netzfrequenz und/oder der resultierenden Sollleistung beobachtet werden. Eine Möglichkeit, dies umzusetzen, kann darin bestehen, dass die Sollleistung der Windenergieanlage auf einen künstlichen Wert abgesenkt wird und dann, nachdem das System eingeschwungen ist, dieser Sollleistungswert sprunghaft auf den Leistungswert erhöht wird, den die zentrale Parksteuerung aufgrund der aktuellen Frequenz vorgeben würde. In dem Moment, in dem die Sollleistung am Eingang der Windenergieanlage also auf den Wert gesprungen ist, den die zentrale Parksteuerung eigentlich die ganze Zeit schon vorgegeben hat, kann dann die bis dahin unterbrochene Signalverbindung von der zentralen Parksteuerung zur Windenergieanlage, über die der frequenzabhängige Leistungssollwert übertragen wird, wieder aktiviert werden.

Dadurch ist es möglich, einem existierenden System einen Sprung vorzugeben, ohne dass aber tatsächlich eine physikalische Größe im Netz, also insbesondere die Netzfrequenz, verändert werden muss.

Alternativ kann auch ein Frequenzmesswert am Eingang der zentralen Parksteuerung künstlich manipuliert werden, z. B. abgesenkt werden, und dann sprungförmig auf den aktuellen Wert erhöht werden, um dann aber den aktuellen Frequenzwert als Messung einzugeben.

Alternativ kann auch eine Simulation durchgeführt werden, in der beispielsweise tatsächlich die Netzfrequenz sprunghaft verändert wird. Besonders bei einer Simulation stehen auch diverse andere Möglichkeiten einer Frequenzanalyse zur Verfügung, einschließlich einer analytischen, wenn die Eigenschaften aller Elemente bekannt sind.

Besonders ist vorgesehen, dass ein Simulationskreis aufgebaut wird, bei dem das Netz durch einen Phasenschieber und eine variable Last gebildet wird. Der Phasenschieber kann besonders als Synchronmaschine ausgebildet sein, die im Leerlauf betrieben wird. Es wird dann Strom und Spannung erfasst und in der zentralen Parksteuereinheit weiterverwendet. Insbesondere wird daraus die Frequenz bestimmt und davon abhängig ein frequenzabhängiger Sollleistungswert bestimmt und an eine Windenergieanlage gegeben, die entsprechend einen Leistungsausgang hat, der in dieses Testnetz einspeist. Der gesamte Testaufbau kann also aus der zentralen Parksteuereinheit und der Windenergieanlage, die an das Testnetz angeschlossen ist und darein einspeist, aufgebaut sein mit zusätzlich der genannten variablen Last und dem genannten Phasenschieber.

Ausgehend von einer so ermittelten Systemeigenfrequenz wird vorgeschlagen, dass die zweite Tiefpasszeitkonstante größer gewählt wird als ein Kehrwert der Systemeigenfrequenz. Das hat zunächst den Effekt, dass auch eine gleiche Eigenfrequenz im Filter und im restlichen System vermieden wird, insbesondere aber durch die größere Zeitkonstante, also das langsamere Verhalten des zweiten Tiefpassfilters, ein gedämpftes Verhalten erreicht werden kann.

Besonders ist vorgesehen, dass der zweite Tiefpassfilter verwendet wird oder zumindest dominant ist, wenn ein Netzfehler aufgetreten ist, was unten noch im Detail erläutert wird. Ist ein Netzfehler aufgetreten, neigt das System zum Schwingen, und für diesen Fall ist der zweite Tiefpassfilter mit zweiter Tiefpasszeitkonstante vorgesehen, die im Grunde zu einem langsameren Verhalten des Tiefpassfilters führt als das System aufgrund seiner Systemeigenfrequenz aufweist.

Es wird also dadurch vorgesehen, dass der zweite Tiefpassfilter Anwendung findet, insbesondere dominant ist, während eine Schwingung im elektrischen Versorgungsnetz auftreten kann. Genau in diesem Fall kommt die dämpfende Wirkung eines solchen Tiefpassfilters zur Geltung, denn dann soll verhindert werden, dass ein zu schneller Tiefpassfilter eine Schwingung unterstützt oder jedenfalls nicht verhindert. Der zweite langsame Tiefpassfilter, der nämlich in Bezug auf die Systemeigenschaft bzw. Systemeigenfrequenz langsam ist, kann eine solche Schwingung verhindern, regt sie zumindest nicht weiter an, sodass sie wenigstens abklingen kann.

Gemäß einem Aspekt wird vorgeschlagen, dass die erste und zweite Tiefpasszeitkonstante zur Anpassung an eine Systemveränderung und/oder geänderte Systemanforderung veränderlich sind, wobei eine Beschränkung so vorgesehen ist, dass eine Veränderung nur so erfolgt, dass die erste Tiefpasszeitkonstante kleiner ist als die zweite Tiefpasszeitkonstante.

Es soll also in jedem Fall beibehalten werden, dass die beiden Tiefpassfilter eine bestimmte Aufgabe haben, nämlich, dass der erste Tiefpassfilter schnell ist und im Falle eines Netzfehlers schnell reagieren kann bzw. eine schnelle Reaktion zulässt, wohingegen der zweite Tiefpassfilter langsamer ist und nach dem Auftreten eines Netzfehlers, wenn das System noch labil sein kann und/oder zur Schwingung neigen kann, auf vorhandene oder potentiell entstehende Schwingungen beruhigend wirkt.

Da die Tiefpassfilter besonders in einem Prozessrechner implementiert sein können, kann ohne Weiteres eine Zeitkonstante oder ein Verstärkungsfaktor des Tiefpassfilters verändert werden. Es kann eine Programmierung verwendet werden, bei der beide Filterkonstanten zugleich verändert werden, während Randbedingungen eingehalten werden können. Eine solche Randbedingung ist, dass die erste Tiefpasszeitkonstante kleiner als die zweite ist. Die Randbedingung kann auch so ausgestaltet sein, dass die erste und zweite Tiefpasszeitkonstante in einem gewissen Verhältnis zueinander stehen, die zweite beispielsweise den zehnfachen Wert der ersten aufweist.

Gemäß einem Aspekt wird vorgeschlagen, dass die erste Tiefpasszeitkonstante kleiner als die zweite Tiefpasszeitkonstante ist, und in einem Stabilbetrieb, wenn kein Netzfehler identifiziert wurde, oder nach einem Netzfehler ein stabiler Zustand erreicht ist, der erste Gewichtungsfaktor größer als der zweite gewählt wird, insbesondere der erste Gewichtungsfaktor zu 1 und der zweite zu 0 gewählt wird. In einem solchen Stabilbetrieb ist somit im Wesentlichen, oder ausschließlich, der erste Tiefpassfilter und damit der schnellere Tiefpassfilter faktisch im Eingriff. Damit können Frequenzänderungen der Netzfrequenz schnell erfasst und weiterverarbeitet werden, insbesondere in einen frequenzabhängigen Leistungssollwert umgerechnet werden.

Weiter wird vorgeschlagen, dass in einem Störfallbetrieb nach einem Identifizieren eines Netzfehlers, insbesondere nach Ablauf einer Übergangszeit, der erste Gewichtungsfaktor verkleinert und der zweite Gewichtungsfaktor vergrößert wird. Insbesondere wird vorgeschlagen, dass der erste Gewichtungsfaktor auf einen kleinen Wert im Bereich von 5% bis 20% verringert und der zweite Gewichtungsfaktor auf einen großen Wert entsprechend im Bereich von 80% bis 95% erhöht wird. Dieser Störfallbetrieb schließt sich also an einen Stabilbetrieb an, wenn ein Netzfehler identifiziert wird.

Vorzugsweise schließt er sich aber nicht sofort an, sondern erst nach Ablauf einer Übergangszeit. Diese Übergangszeit kann im Bereich von 0,02 s bis 10 s liegen, insbesondere im Bereich von 0,1 s bis 1 s. In dem Störfallbetrieb wird also der erste Gewichtungsfaktor verringert und insbesondere auf 0 gebracht, während der zweite erhöht und insbesondere auf 1 gebracht wird. Nachdem diese Änderung vollzogen ist, ist somit der zweite, also langsamere Tiefpassfilter dominant oder ausschließlich aktiv. Dadurch wird erreicht, dass in diesem Störfallbetrieb Schwingungen des elektrischen Versorgungsnetzes verhindert oder zumindest nicht noch weiter angeregt werden.

Dazu wurde aber erkannt, dass zu Beginn bzw. vor diesem Störfallbetrieb, wenn nämlich der Netzfehler gerade identifiziert wird, ein schneller Tiefpassfilter noch wünschenswert ist, damit der identifizierte Fehler schneller übertragen wird bzw. er insgesamt schneller identifiziert wird. Außerdem wurde erkannt, dass ein zu befürchtendes Aufschwingen des elektrischen Versorgungsnetzes in Kombination mit der Einspeiseeinheit, insbesondere einer Windenergieanlage oder einem Windpark, eine Zeit lang benötigt, sodass der Störfallbetrieb nicht sofort vollständig umgesetzt werden muss. Nach einer Zeit von 10 s sollte allerdings der Störfallbetrieb dann wirksam sein.

Es wird außerdem vorgeschlagen, dass nach dem Störfallbetrieb, insbesondere nach Ablauf einer Sicherheitszeit und/oder nach Erfüllen eines Stabilitätskriteriums, eine Rückkehr in den Stabilbetrieb durchgeführt wird, indem der erste Gewichtungsfaktor wieder erhöht wird, insbesondere auf 1, und der zweite Gewichtungsfaktor wieder verringert wird, insbesondere auf 0.

Hier wird besonders vorgeschlagen, dass im Störfallbetrieb der schnelle Tiefpassfilter, der durch den Gewichtungsfaktor W1 gewichtet wird, in seinem Einfluss reduziert wird, aber nicht vollständig. Daher wird im Störfallbetrieb der erste Gewichtungsfaktor W1 nicht auf 0, sondern auf einen kleinen Wert abgesenkt, insbesondere im Bereich zwischen 5% und 20%, bevorzugt etwa 10%. Dadurch kann auch im Störfallbetrieb noch gewährleistet werden, dass ein weiteres Netzereignis, besonders ein weiterer Netzfehler, schnell über diesen schnellen Tiefpassfilter übertragen wird, wenn auch mit geringerer Amplitude.

Dabei ist ein kleiner Wert oder ein großer Wert für die Gewichtungsfunktionen in Bezug auf einen Bereich von 0% bis 100% zu verstehen, bzw. 0 bis 1. Der kleinste Wert ist also 0 und der größte 1. Der erste und zweite Gewichtungsfaktor werden dabei insbesondere so gewählt, dass ihre Summe 100% beträgt, also wird, wenn bspw. W1 = 5% gewählt wurde, W2 = 95% gewählt.

Für den Stabilbetrieb wird gemäß einem Aspekt aber vorgeschlagen, dass hier der zweite Gewichtungsfaktor W2, der den langsamen Tiefpassfilter gewichtet, vollständig auf 0 abfallen kann. Hier wurde erkannt, dass im Stabilbetrieb der langsame Tiefpassfilter nicht benötigt wird und seine Gewichtung daher vollständig auf 0 abfallen kann.

Die Sicherheitszeit kann im Bereich von 1 min bis 10 min liegen.

Eine solche Sicherheitszeit ist vorgesehen, damit sichergestellt werden kann, dass sich das elektrische Versorgungsnetz von dem Netzfehler wieder beruhigt hat, um zu vermeiden, dass zu schnell in den Stabilbetrieb zurückgekehrt wird, in dem der zweite, also langsamere Tiefpassfilter nicht mehr aktiv ist oder zumindest eine geringere Dominanz als der erste, schnelle Tiefpassfilter hat. Der erste Tiefpassfilter ist aber nicht oder weniger geeignet, Netzschwingungen zu verhindern oder zumindest das Aufschwingen nicht anzuregen, sodass der Stabilbetrieb erst wieder gewählt werden sollte, wenn solche Schwingungen im Netz nicht mehr zu erwarten sind.

Es kann auch ein Stabilitätskriterium zugrunde gelegt werden, das erst erfüllt werden muss, bevor zum Stabilbetrieb zurückgekehrt wird. Das Kriterium kann beispielsweise eine Schwankung der Netzfrequenz oder eine Schwankung der Netzspannung überprüfen und dann erfüllt sein, wenn eine solche Netzfrequenzschwankung oder Netzspannungsschwankung unter einen Grenzwert abgefallen ist, der insbesondere im Bereich von 1 bis 5 % liegt. Die Amplitude der Netzfrequenz bzw. Netzspannung erfüllt also dieses Stabilitätskriterium, wenn die Netzfrequenz bzw. Netzspannung um weniger als das 1 % bzw. die 5 % schwankt. Es kommen aber auch andere Kriterien in Betracht.

Ein solches Stabilitätskriterium kann mit dem Ablauf einer Sicherheitszeit kombiniert werden, indem zunächst das Stabilitätskriterium erfüllt werden muss und dann noch die Sicherheitszeit abgewartet wird.

Gemäß einem Aspekt wird vorgeschlagen, dass, wenn die erste Tiefpasszeitkonstante kleiner als die zweite Tiefpasszeitkonstante ist, was für alle beschriebenen Aspekte angenommen werden kann, in dem Störfallbetrieb nach dem Identifizieren des Netzfehlers, insbesondere nach Ablauf der Übergangszeit, der erste Gewichtungsfaktor kontinuierlich, insbesondere mit einer zeitlichen Rampenfunktion, verkleinert und derzweite Gewichtungsfaktor damit synchron vergrößert wird, insbesondere so, dass der erste Gewichtungsfaktor auf einen kleinen Wert von 5% bis 20% verringert wird und der zweite Gewichtungsfaktor auf einen großen Wert im Bereich von 80% bis 95% erhöht wird. Auch hier werden der erste und zweite Gewichtungsfaktor dabei insbesondere so gewählt, dass ihre Summe 100% beträgt, also wird, wenn bspw. W1 = 5% gewählt wurde, W2 = 95% gewählt. Der Grund, den ersten Gewichtungsfaktor vorzugsweise nicht vollständig auf 0 abzusenken, ist oben schon beschrieben worden, es soll nämlich weiterhin noch gewährleistet sein, dass ein weiteres Netzereignis bzw. Netzfehler schnell über das schnelle Tiefpassfilter übertragen wird.

Somit erfolgt in dem Störfallbetrieb und damit nach dem Identifizieren des Netzfehlers ein kontinuierlicher Übergang vom Stabilbetrieb in den Teil des Störfallbetriebs, bei dem nur noch die zweite Tiefpassfunktion aktiv ist, zumindest dominant ist. Dazu kann der erste Gewichtungsfaktor über eine zeitliche Rampenfunktion angehoben und entsprechend dazu der zweite Gewichtungsfaktor mit entsprechend abfallender Rampe verringert werden.

Hier wurde besonders erkannt, dass durch ein solches Erhöhen des einen Gewichtungsfaktors synchron zum Verringern des zweiten Gewichtungsfaktors, besonders über Rampenfunktionen, zwei existierende Filterfunktionen sehr gut kontinuierlich gegeneinander getauscht werden können. Besonders wurde erkannt, dass ein solcher Übergang von einer zu einer anderen Filterfunktion besser geeignet ist, als stattdessen eine Zeitkonstante einer Filterfunktion zu verändern.

Hier wurde besonders erkannt, dass auch in dieser Übergangsphase beide Filterfunktionen ganz normal funktionieren. Insbesondere brauchen keine Bedenken zu bestehen, dass die Veränderung einer Filterfunktion zu einem unerwünschten Ergebnis, insbesondere zu einer Instabilität führen könnte. Insbesondere braucht keine Filterfunktion auf ihr Verhalten für einen solchen Übergang, wenn besonders ihre Zeitkonstante kontinuierlich im laufenden Betrieb geändert werden sollte, überprüft zu werden.

Außerdem oder alternativ wird vorgeschlagen, dass nach dem Störfallbetrieb, insbesondere nach Ablauf der Sicherheitszeit und/oder nach Erfüllen des Stabilitätskriteriums, eine Rückkehr in den Stabilbetrieb eingeleitet und insbesondere durchgeführt wird, indem der erste Gewichtungsfaktor kontinuierlich, insbesondere mit einer zeitlichen Rampenfunktion, wieder erhöht wird, insbesondere auf 1, und der zweite Gewichtungsfaktor damit synchron verringert wird, insbesondere auf 0. Auch hier kann somit ein Übergang vom Störfallbetrieb zum Stabilbetrieb durch einen kontinuierlichen Übergang realisiert werden, indem einfach die beiden Gewichtungsfaktoren über gegenläufige Rampen von ihrer Einstellung im Störfallbetrieb zur Einstellung im Stabilbetrieb geändert werden. Der Stabilbetrieb kann auch synonym als stabiler Betrieb bezeichnet werden.

Es kommt aber auch in Betracht, dass die Rückkehr in den Stabilbetrieb eingeleitet wird, aber der Stabilbetrieb nicht erreicht wird, weil vor Erreichen des Stabilbetriebs ein weiteres Netzereignis, insbesondere Netzfehler, auftritt, oder andere Instabilität vorliegt, insbesondere eine Inselnetzsituation aufgetreten ist. Dann kommt in Betracht, dass die Gewichtungsfaktoren nicht vollständig zurückgefahren werden. Bspw. kann der erste Gewichtungsfaktor nur auf einen Wert von 50% bis 70% erhöht werden und der zweite auf einen Wert von 30% bis 50% verringert werden.

Gemäß einem Aspekt wird vorgeschlagen, dass die Einspeiseeinheit als Windpark mit mehreren Windenergieanlagen ausgebildet ist, und das Filtern des Frequenzmesssignals mittels der Filtereinrichtung und das Bestimmen des frequenzabhängigen Leistungssollwertanteils in einer zentralen Parksteuereinheit erfolgt, und in Abhängigkeit von dem frequenzabhängigen Leistungssollwertanteil ein einzuspeisender Leistungssollwert an die Windenergieanlagen übertragen wird, wobei insbesondere der Leistungssollwert als Summe aus dem frequenzabhängigen Leistungssollwertanteil, gegebenenfalls nach weiterer Umformung, und einem vorbestimmbaren Sollleistungsgrundwert gebildet wird.

Somit erfolgt das Filtern und damit auch das Verwenden der wenigstens zwei Filterfunktionen, insbesondere Tiefpassfilter, in der zentralen Parksteuereinheit. Dort wird das Frequenzmesssignal also gefiltert, sodass je nach Gewichtungsfaktor ein schnellerer oder langsamerer Tiefpassfilter die Filterung durchführt, und das Ergebnis ist dann das Frequenzfiltersignal, von dem abhängig der frequenzabhängige Leistungssollwertanteil bestimmt wird.

Zur Einspeisung wird aber vorgeschlagen, nicht nur eine Leistung entsprechend diesen Leistungssollwertanteil zu bestimmen und einzuspeisen, sondern zusätzlich quasi einen Fixwert zu ergänzen. Ein solcher Fixwert kann der vorbestimmbare Sollleistungsgrundwert sein, der auch synonym als Sollleistungsgrundanteil bezeichnet werden kann. Er kann sich nach einer Netzanforderung oder vorhandenen Windverhältnissen, also verfügbarer Windleistung, bestimmen. Insoweit kann der frequenzabhängige Leistungssollwertanteil und damit nach der Umsetzung ein frequenzabhängiger Leistungsanteil, nämlich Wirkleistungsanteil, auf diesen Leistungsgrundwert aufaddiert werden. Die eingespeiste Leistung kann dann um diesen Sollleistungsgrundwert und damit bei idealer Umsetzung um den Leistungsgrundwert schwanken.

Dabei kommt in Betracht, dass besonders dann, wenn die Netzfrequenz einen nominalen Wert annimmt, der frequenzabhängige Leistungssollwertanteil 0 ist. Besonders ist vorgesehen, dass er erst entsteht, wenn Frequenzänderungen auftreten, besonders, wenn sie signifikant sind, nämlich um ein Totband von dem Frequenznennwert abweichen. Ein solches Totband kann im Bereich von 0,2 bis 0,8 Hz, insbesondere 0,3 bis 0,6 Hz liegen.

Die vorgeschlagene Filtereinrichtung verwendet also die beiden Filterfunktionen bzw. die beiden Tiefpassfilter und kann damit einen frequenzabhängigen Leistungssollwertanteil an die Windenergieanlagen übertragen, der Schwingungen der Netzfrequenz nicht mehr oder zumindest reduziert an die Windenergieanlagen weitergibt.

Der frequenzabhängige Leistungssollwertanteil und/oder der einzuspeisende Leistungssollwert und/oder der vorbestimmbare Sollleistungsgrundwert können auch als prozentuale Werte an die Windenergieanlagen übertragen werden. Diese prozentualen Werte können sich auf eine Parknennleistung und/oder eine Anlagennennleistung beziehen. Das ist dann die gleiche Referenz, wenn die Summe aller Nennleistungen der Windenergieanlagen im Park der Nennleistung des Parks entsprechen, was üblicherweise der Fall sein sollte.

Gemäß einem Aspekt wird vorgeschlagen, dass der frequenzabhängige Leistungssollwertanteil mittels einer Begrenzungsfunktion auf eine Leistungsgrenze begrenzt wird, um einen begrenzten Sollwertanteil zu bilden, und der begrenzte Sollwertanteil auf den Sollleistungsgrundwert aufaddiert wird, um den Leistungssollwert für die insgesamt einzuspeisende Leistung zu bilden. Dieser Leistungssollwert für die insgesamt einzuspeisende Leistung kann auch synonym als Gesamtleistungssollwert bezeichnet werden.

Somit wird vorgeschlagen, dass eine Begrenzung eingeführt wird, die aber dabei auf den frequenzabhängigen Sollleistungsanteil angewendet wird. Dadurch wird erreicht, dass trotz Begrenzung ein frequenzabhängiger Leistungsanteil realisierbar ist. Bei Vorgabe einer Leistungsgrenze für die insgesamt einzuspeisende Leistung, also die Gesamtleistung bzw. für den Gesamtleistungssollwert, könnte diese Grenze bereits ohne Aufschalten des frequenzabhängigen Leistungsanteils erreicht werden, wodurch eine frequenzabhängige Leistungsaufschaltung wirkungslos wäre, zumindest ihr positiver Anteil.

Vorzugsweise wird der Sollleistungsgrundwert so gewählt, dass er um die Leistungsgrenze unter einer verfügbaren Leistung liegt, insbesondere unter einer Windleistung, wenn die Erzeugungseinheit eine Windenergieanlage oder ein Windpark ist. Der Sollleistungsgrundwert wird somit entsprechend gedrosselt. Dadurch kann erreicht werden, dass der begrenzte frequenzabhängige Sollleistungsanteil in jedem Fall noch auf den Sollleistungsgrundwert aufgeschaltet werden kann, weil erst dadurch im Maximalfall die Grenze erreicht wird, die durch die verfügbare Leistung vorgegeben ist.

Gemäß einem Aspekt wird vorgeschlagen, dass

- zum Erfassen der Netzfrequenz die Netzspannung erfasst, insbesondere gemessen wird und aus der Netzspannung die Netzfrequenz bestimmt wird, insbesondere so, dass

- aus der gemessenen dreiphasigen Netzspannung ein Raumzeiger $\vec{u}$ bestimmt wird, insbesondere mittels der Formel

$$\vec{u} = \left[ u_1 + u_2 \exp\left( j\,\frac{2}{3}\,\pi \right) + u_3 \exp\left( j\,\frac{4}{3}\,\pi \right) \right],$$

mit $u_1$, $u_2$ und $u_3$ jeweils als Augenblickswert, insbesondere als momentaner Messwert einer ersten, zweiten bzw. dritten Netzspannungsphase,

- das Bestimmen des Raumzeigers $\vec{u}$ zeitlich, insbesondere in weiteren Abtastschritten, wiederholt wird, und

- aus einer zeitlichen Veränderung eines Phasenwinkels des Raumzeigers $\vec{u}$ die erfasste Netzfrequenz bestimmt wird.

Gemäß einem Aspekt wird vorgeschlagen, dass die erste und zweite Filterfunktion jeweils durch eine der folgenden Filtereinheiten realisiert sind.

Die Filtereinheit kann als PT1-Glied realisiert werden, also ein Verzögerungsglied erster Ordnung. Dadurch ist sichergestellt, dass eine solche Filtereinheit kein Überschwingverhalten aufweist. Das PT1-Glied kann im Laplace-Bereich durch folgende Übertragungsfunktion G(s) dargestellt werden, die den Zusammenhang zwischen einem Ausgangssignal Y(s) von einem Eingangssignal U(s) angibt:

$$G(s) = \frac{Y(s)}{U(s)} = \frac{K}{1 + T \cdot s}$$

Darin bildet K einen Verstärkungsfaktor und T eine Zeitkonstante, nämlich die Filterzeitkonstante.

Die Filtereinheit kann auch als PT2-Glied realisiert werden mit einem Dämpfungsgrad D>1. Ein solches PT2-Glied ist im Laplace-Bereich durch folgende Gleichung darstellbar:

$$G(s) = \frac{Y(s)}{U(s)} = \frac{K}{T^2 \cdot s^2 + 2 \cdot D \cdot T \cdot s + 1}$$

In der Gleichung bezeichnet K einen Verstärkungsfaktor, der - wie auch beim PT1-Glied - als 1 gewählt werden kann. Weiterhin bezeichnet T eine Filterzeitkonstante und D den Dämpfungsgrad. Wird D größer als 1 gewählt, ergibt sich eine Sprungantwort ohne Überschwinger mit einem asymptotischen Verhalten. Auch dadurch ist ein gutes Tiefpassverhalten mit dämpfender Wirkung erzielbar.

Die Filtereinheit kann auch als eine Mittelwerteinheit zum Durchführen einer laufenden Mittelwertbildung realisiert werden. Eine solche Mittelwertbildung kann besonders als Fensterfunktion ausgebildet sein, die ein gleitendes Fenster verwendet, in der alle Werte eines Zeitintervalls mit vorbestimmter Länge aufgenommen werden und von ihnen der Mittelwert gebildet wird. Im nächsten Abtastschritt schiebt sich dieses Fenster quasi um einen Wert weiter und es wird der Mittelwert über die Abtastwerte gebildet, zu denen nun ein neuer hinzugekommen ist und ein alter weggefallen ist. Eine solche Mittelwertbildung und damit die entsprechende Mittelwerteinheit hat ebenfalls eine Eigenschaft, bei der keine Überschwinger entstehen, sodass sie ebenfalls gut zur Dämpfung geeignet ist.

Die Filtereinheit kann durch ein Filter realisiert sein, das ein zu einem PT1-Glied oder zu einem PT2-Glied mit einem Dämpfungsgrad D>1 ähnliches Verhalten aufweist. Im Grunde wurde erkannt, dass ein PT1-Verhalten oder PT2-Verhalten sehr vorteilhaft ist, es muss aber nicht unbedingt genau durch ein PT1-Glied oder PT2-Glied mit Dämpfungsgrad D>1 realisiert sein, sondern eine Realisierung durch eine Filterfunktion mit ähnlichen Eigenschaften kann zu ähnlichen Ergebnissen führen. Besonders sollte aber ein entsprechendes dämpfendes Verhalten vorhanden sein.

Die Filtereinheit kann auch als Filterelement mit einer vorgebbaren Zeitkonstante und mit einer Sprungantwort ohne Überschwinger realisiert sein. Durch die vorgebbare Zeitkonstante ist die Dynamik und damit auch eine Tiefpasszeitkonstante einstellbar; es ist also einstellbar, wie schnell das Filterelement ist. Es wird dabei so ausgebildet, dass es auf eine Sprungantwort ohne Überschwinger reagiert, wie das auch bei dem PT2-Glied ist, wenn der Dämpfungsgrad D größer als 1 gewählt wird.

Gemäß einem Aspekt wird vorgeschlagen, dass zum Einspeisen der elektrischen Leistung ein Windpark mit einer einen Parkleistungsregler aufweisenden Parksteuereinheit und mit mehreren Windenergieanlagen verwendet wird, der einen Kaskadenregler mit drei Regelkreisen aufweist.

Diese drei Regelkreise sind ein innerer Regelkreis, in dem jede der Windenergieanlagen eine abgegebene Leistung auf eine durch den Parkleistungsregler vorgegebene Anlagensollleistung regelt, ein mittlerer Regelkreis, in dem der Parkleistungsregler die Anlagensollleistung in Abhängigkeit von einem Vergleich zwischen einem Parkleistungssollwert und einem Parkleistungsistwert als Stellgröße bestimmt und an die Windenergieanlagen als Anlagensollleistung überträgt, und ein äußerer Regelkreis, in dem in Abhängigkeit von der erfassten Netzfrequenz der Leistungssollwertanteil und davon abhängig der Parkleistungssollwert als Stellgröße bestimmt und an den Parkleistungsregler übergeben wird.

Es sind somit diese drei Regelkreise vorhanden, und hier wurde besonders erkannt, dass das Bestimmen des Parkleistungssollwertes in Abhängigkeit von der Netzfrequenz ebenfalls als Teil eines Regelkreises, nämlich des äußeren Regelkreises, anzusehen ist. Hier liegt die Überlegung zugrunde, dass letztlich dieser äußere Regelkreis Einfluss auf die eingespeiste Leistung und damit Einfluss auf die resultierende Netzfrequenz hat. Diese resultierende Netzfrequenz wird zum Bestimmen des Parkleistungssollwertes verwendet und somit hängt dieser Parkleistungssollwert von der Netzfrequenz ab, die er selbst beeinflusst. Es liegt also eine Rückführung im regelungstechnischen Sinne vor, sodass in der Tat diese Bestimmung der Parksollleistung als Teil eines äußeren Regelkreises angesehen werden kann.

Darauf aufbauend wird vorgeschlagen, dass die Filtereinrichtung mit Tiefpassverhalten zum Filtern des Frequenzmesssignals Teil des äußeren Regelkreises ist. Dadurch kann über diese Filtereinrichtung das Zeitverhalten des äußeren Regelkreises beeinflusst werden.

Dazu wird weiter vorgeschlagen, dass die zweite Tiefpasszeitkonstante, wenn diese größer als die erste Tiefpasszeitkonstante ist, so gewählt wird, dass der äußere Regelkreis ein langsameres Zeitverhalten als der mittlere und/oder innere Regelkreis aufweist, wenn der zweite Gewichtungsfaktor zu 1 gewählt wird, oder zumindest dominant ist. Als dominant wird der zweite Gewichtungsfaktor angesehen, wenn er im Bereich von 80% bis 95% liegt. Wenn der den Wert 1 aufweist, ist er natürlich auch dominant. Damit, dass der zweite Gewichtungsfaktor dominant ist, ist besonders gemeint, dass der zweite Tiefpassfilter, der durch den zweiten Gewichtungsfaktor angesteuert wird, durch einen solchen großen Gewichtungsfaktor dominant ist, nämlich gegenüber dem ersten Tiefpassfilter.

Hier liegt also die Situation zugrunde, die vorstehend schon beschrieben wurde, dass die zweite Tiefpasszeitkonstante größer als die erste ist, sodass die zweite Filterfunktion die langsamere von beiden ist. Durch den zweiten Gewichtungsfaktor kann diese im Grunde dominant gestellt werden oder alleine aktiv sein. Ist der zweite Gewichtungsfaktor 1, wirkt also nur diese zweite Filterfunktion.

Das ist besonders dann vorgesehen, wenn das elektrische Versorgungsnetz nach einem Netzfehler zum Schwingen neigt, wenn das Netz also noch nicht ganz stabil arbeitet oder zumindest ein Schwingen erwartet werden kann. In diesem Fall ist also die zweite Filterfunktion aktiv und die zweite Tiefpasszeitkonstante, also die Zeitkonstante des aktiven Filters, ist dann so gewählt, dass der äußere Regelkreis langsamer als der mittlere und/oder innere Regelkreis ist.

Grundsätzlich ist bei einem Kaskadenregler wünschenswert, dass die Regelkreise von au-βen nach innen immer schneller werden, dass also der äußere Regelkreis der langsamste ist. Solche Forderungen werden aber nicht immer eingehalten, da sie nicht immer eingehalten werden müssen. Besonders sind sie im vorliegenden Fall für den äußeren Regelkreis bisher nicht eingehalten worden, da von einem nur geringen Einfluss auf die Netzfrequenz durch diesen äußeren Regelkreis ausgegangen wurde.

Im Grunde wurde insoweit die frequenzabhängige Bestimmung der Parkleistung eher als Steuerung angesehen. Dafür waren dann besonders kleine Zeitkonstanten vorteilhaft, damit eine Eingangsgröße einer solchen angenommenen Steuerung, hier nämlich die Netzfrequenz, möglichst schnell Einfluss auf die zu bestimmende Parkleistung hatte.

Nun wurde aber erkannt, dass der äußere Regelkreis als solcher betrachtet werden sollte und er auch ein dynamisches Verhalten aufweist, das zu berücksichtigen ist.

Um nun den äußeren Regelkreis entsprechend langsam zu bekommen, wird vorgeschlagen, die zweite Tiefpasszeitkonstante entsprechend anzupassen, der äußere Regelkreis wird also durch die zweite Filterfunktion entsprechend verlangsamt.

Insbesondere ist vorgesehen, dass die erste Tiefpasszeitkonstante so gewählt wird, dass der äußere Regelkreis kein langsameres Zeitverhalten als der mittlere und/oder innere Regelkreis aufweist, wenn der erste Gewichtungsfaktor zu 1 gewählt wird, oder gegenüber dem zweiten Gewichtungsfaktor zumindest dominant ist, insbesondere einen Wert im Bereich von 80% bis 95% aufweist. Hier liegt die Erkenntnis zugrunde, dass weiterhin eine schnelle Reaktion der frequenzabhängigen Leistungsregelung gewünscht ist. Diese soll aber nur vorgesehen sein, wenn keine Schwingungsprobleme durch einen Netzfehler bzw. nach einem Netzfehler vorliegen. Für stabile Netzverhältnisse außerhalb eines solchen Netzfehlers oder Verhalten nach einem solchen Netzfehler ist besonders vorgesehen, die erste Filterfunktion einzusetzen. Diese wird durch den ersten Gewichtungsfaktor im Grunde aktiv oder zumindest dominant geschaltet. Es wurde erkannt, dass für diesen Fall die Anforderung, dass der äußere Regelkreis langsamer als der mittlere und/oder innere Regelkreis sein sollte, entbehrlich ist, da ein stabiles Netz vorliegt.

Somit wird eine Lösung vorgeschlagen, bei der die Kaskadenregelung des Windparks situationsabhängig eine hohe Stabilität oder eine höhere Dynamik aufweisen kann.

Erfindungsgemäß wird zudem eine Einspeiseeinheit, insbesondere eine Windenergieanlage oder ein Windpark, vorgeschlagen.

Erfindungsgemäß wird somit auch eine Einspeiseeinheit, insbesondere eine Windenergieanlage oder ein Windpark, zum Einspeisen elektrischer Leistung in ein eine Netzspannung mit einer Netzfrequenz aufweisendes elektrisches Versorgungsnetz vorgeschlagen. Die Einspeiseeinheit ist dazu vorbereitet, ein Verfahren mit folgenden Schritten auszuführen:

- Erfassen der Netzfrequenz und weitergeben der erfassten Netzfrequenz als Frequenzmesssignal,

- Filtern des Frequenzmesssignals mittels einer Filtereinrichtung mit Tiefpassverhalten in ein Frequenzfiltersignal,

- Bestimmen eines frequenzabhängigen Leistungssollwertanteils in Abhängigkeit von dem Frequenzfiltersignal, und

- Einspeisen elektrischer Leistung in Abhängigkeit von dem frequenzabhängigen Leistungssollwertanteil, wobei

- zum Filtern des Frequenzmesssignals mittels der Filtereinrichtung mit Tiefpassverhalten wenigstens eine erste und eine zweite Filterfunktion mit Tiefpassverhalten mit charakteristischer erster bzw. zweiter Tiefpasszeitkonstanten verwendet werden, und

- zwischen der ersten und zweiten Filterfunktion ganz oder teilweise gewechselt werden kann, insbesondere mittels eines ersten und/oder zweiten Gewichtungsfaktors.

Die Einspeiseeinheit ist insbesondere dadurch zum Ausführen dieses Verfahrens vorbereitet, dass das Verfahren auf einer Steuereinrichtung der Einspeiseeinheit implementiert ist. Besonders im Falle eines Windparks kann das Verfahren auf einer Parksteuereinheit implementiert sein, gegebenenfalls mit der Implementierung von Teilschritten auf Prozessrechnern der einzelnen Windenergieanlagen, die auch als Anlagensteuerung bezeichnet werden können.

Die Einspeiseeinheit erreicht somit die Vorteile, wie vorstehend zu dem Verfahren erläutert wurde, und kann auch entsprechend spezifiziert sein.

Gemäß einem Aspekt wird vorgeschlagen, dass die Einspeiseeinheit dadurch gekennzeichnet ist, dass eine zentrale Steuereinheit vorgesehen ist. Wenn die Einspeiseeinheit ein Windpark ist, ist insbesondere eine zentrale Parksteuereinheit vorgesehen. Auf einer solchen zentralen Steuereinheit bzw. zentralen Parksteuereinheit kann das vorstehend erläuterte Verfahren gemäß wenigstens einem Aspekt ausgeführt werden.

Somit wird auch vorgeschlagen, dass die Einspeiseeinheit dazu vorbereitet ist, ein Verfahren nach einem der vorstehend ausgeführten Aspekte auszuführen. Dazu kann das Verfahren insbesondere auf der zentralen Steuereinheit bzw. zentralen Parksteuereinheit implementiert sein, die somit vorzugsweise dazu vorbereitet sind, das Verfahren auszuführen.

Gemäß einem Aspekt ist vorgesehen, dass die Einspeiseeinheit

- zum Einspeisen der elektrischen Leistung einen Windpark mit einer einen Parkleistungsregler aufweisenden Parksteuereinheit und mit mehreren Windenergieanlagen aufweist, der einen Kaskadenregler mit drei Regelkreisen aufweist, mit

- einem inneren Regelkreis, in dem jede der Windenergieanlagen eine abgegebene Leistung auf eine durch den Parkleistungsregler vorgegebene Anlagensollleistung regelt,

- einem mittleren Regelkreis, in dem der Parkleistungsregler die Anlagensollleistung in Abhängigkeit von einem Vergleich zwischen einem Parkleistungssollwert und einem Parkleistungsistwert als Stellgröße bestimmt und an die Windenergieanlagen als Anlagensollleistung überträgt, und

- einem äußeren Regelkreis, in dem in Abhängigkeit von der erfassten Netzfrequenz der Leistungssollwertanteil und davon abhängig der Parkleistungssollwert als Stellgröße bestimmt und an den Parkleistungsregler übergeben wird, wobei

- die Filtereinrichtung mit Tiefpassverhalten zum Filtern des Frequenzmesssignals Teil des äußeren Regelkreises ist und

- die zweite Tiefpasszeitkonstante, wenn die größer als die erste Tiefpasszeitkonstante ist, so gewählt wird, dass der äußere Regelkreis ein langsameres Zeitverhalten als der mittlere und/oder innere Regelkreis aufweist, wenn der zweite Gewichtungsfaktor zu 1 gewählt wird, oder gegenüber dem ersten Gewichtungsfaktor zumindest dominant ist, insbesondere einen Wert im Bereich von 80% bis 95% aufweist, wobei insbesondere

- die erste Tiefpasszeitkonstante so gewählt wird, dass der äußere Regelkreis kein langsameres Zeitverhalten als der mittlere und/oder innere Regelkreis aufweist, wenn der erste Gewichtungsfaktor zu 1 gewählt wird, oder gegenüber dem zweiten Gewichtungsfaktor zumindest dominant ist, insbesondere einen Wert im Bereich von 80% bis 95% aufweist und/oder

- der äußere Regelkreis, wenn die Filterfunktion überbrückt wäre, kein langsameres Zeitverhalten als der mittlere und/oder innere Regelkreis aufweist.

Somit ist die Einspeiseeinheit als Windpark vorgesehen, der durch einen Kaskadenregler mit drei Regelkreisen geregelt wird. Für den äußeren Regelkreis kann durch die vorgeschlagene Filtereinrichtung und die vorgeschlagene Wahl der zweiten Tiefpasszeitkonstanten erreicht werden, dass er bedarfsabhängig langsam genug arbeitet, um im Falle eines Netzfehlers oder eines kritischen Zeitbereichs danach den Kaskadenregler entsprechend stabil zu machen, ansonsten aber den Kaskadenregler entsprechend schnell zu machen.

Nachfolgend wird die Erfindung beispielhaft anhand von Ausführungsbeispielen unter Bezugnahme auf die begleitenden Figuren näher erläutert.

Fig. 1    zeigt eine Windenergieanlage in einer perspektivischen Darstellung.

Fig. 2    zeigt einen Windpark in einer schematischen Darstellung.

Fig. 3    zeigt schematisch eine vereinfachte Regelstrecke einer frequenzabhängigen Leistungsregelung eines Windparks.

Fig. 4    zeigt schematisch einen geschlossenen Regelkreis mit der vereinfachten Regelstrecke gemäß Fig. 3.

Fig. 5    zeigt schematisch eine Simulationsanordnung mit einem fiktiven dämpfungslosen Inselnetz zur Nachweisführung einer internen Dämpfung eines frequenzabhängigen Leistungsreglers.

Fig. 6    zeigt schematisch eine Regelungsstruktur eines bekannten frequenzabhängigen Leistungsreglers in einer Parksteuereinheit eines Windparks.

Fig. 7    zeigt schematisch einen frequenzabhängigen Leistungsregler mit einer vorgeschlagenen Filtereinrichtung zur Verbesserung des frequenzabhängigen Leistungsreglers gemäß Fig. 6.

Fig. 8    zeigt schematisch ein Zeitdiagramm für einen Wechsel zwischen erstem und zweitem Tiefpassfilter einer Filtereinrichtung im Falle eines Netzfehlers.

Fig. 9    zeigt schematisch einen Kaskadenregler für eine frequenzabhängige Leistungsregelung in einem Windpark.

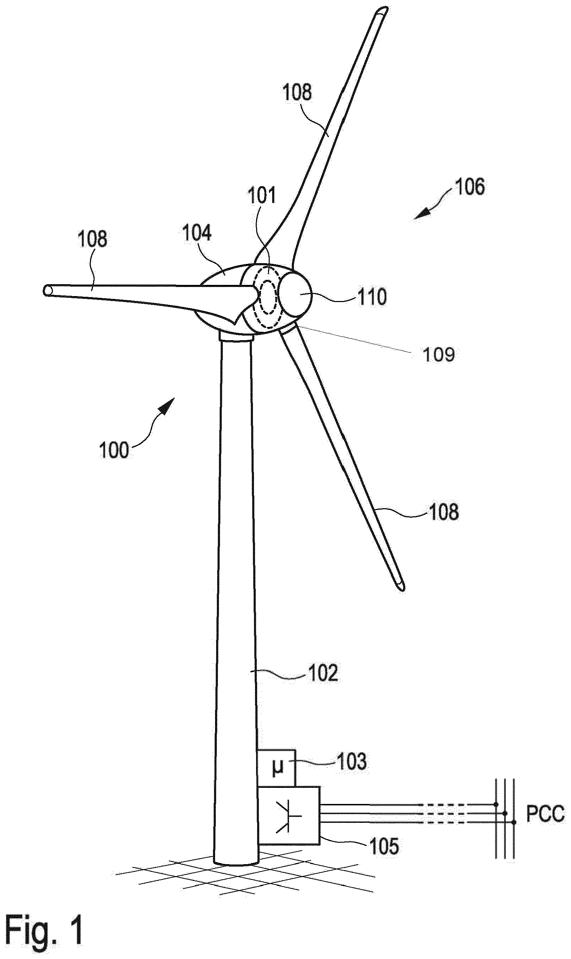

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einer zentralen Parksteuereinheit erhalten.

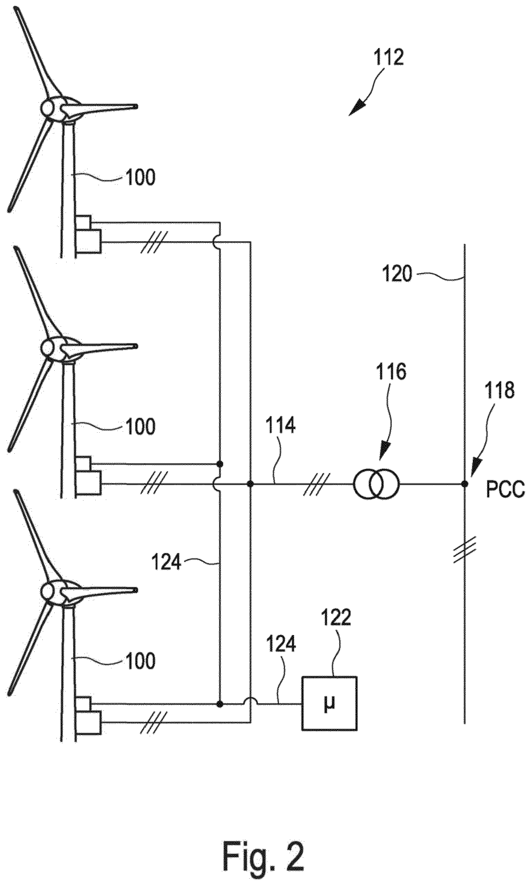

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung oder zentrale Parksteuereinheit bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen. Insbesondere können darüber Werte für eine Anlagensollleistung übertragen werden.

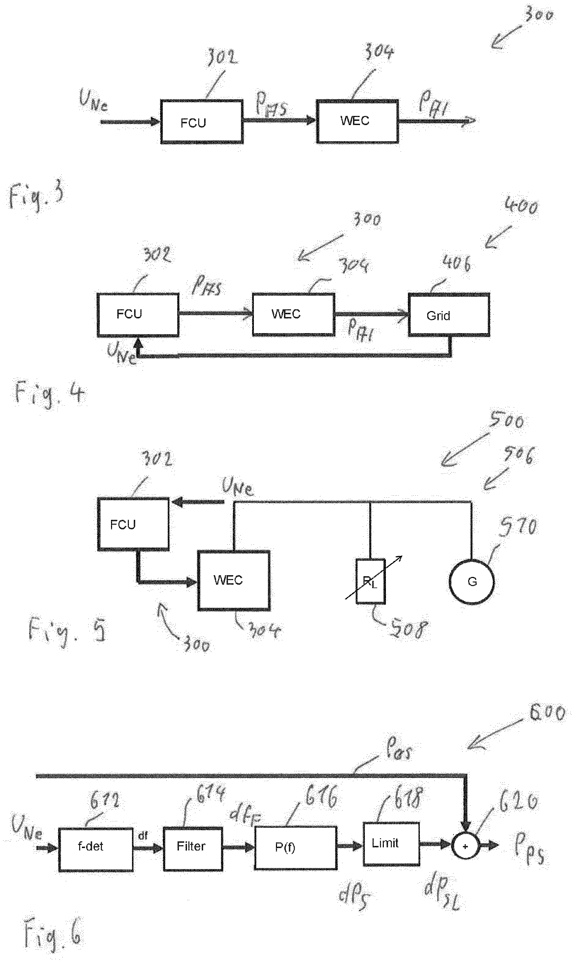

Figur 3 zeigt zur Veranschaulichung eine Regelstrecke 300 mit einer zentralen Parksteuereinheit 302 und einer Windenergieanlage 304, die auch repräsentativ für mehrere, im Grunde parallelgeschaltete Windenergieanlagen steht. Eine Netzspannung $U_{Ne}$ bildet den Eingang in die zentrale Parksteuereinheit 302. Abhängig von dieser Netzspannung $U_{Ne}$ wird eine Frequenz erfasst, was beispielsweise über eine diskrete Fourier-Transformation (DFT) erfolgen kann, um nur ein Beispiel zu nennen. Eine solche Frequenzerfassung kann eine Dynamik und entsprechend eine Verzögerung aufweisen.

Außerdem wird in Abhängigkeit von der so erfassten Frequenz eine Anlagensollleistung $P_{AS}$ bestimmt. Diese hängt somit von der Frequenz ab, kann außerdem von der insgesamt vom Park eingespeisten Leistung abhängen, die auch als Parkleistung bezeichnet werden kann. Besonders wird zunächst in Abhängigkeit von der Frequenz eine Parksollleistung bestimmt und diese mit einer Parkistleistung verglichen und davon abhängig die Anlagensollleistung $P_{AS}$ angepasst. All dies kann auch eine Dynamik beinhalten und damit auch eine Verzögerung.

Die Anlagensollleistung $P_{AS}$ wird dann an die jeweilige Windenergieanlage 304 übertragen. Auch das Übertragen kann eine Verzögerung beinhalten. Die Anlagensollleistung $P_{AS}$ kann als Leistungswerte oder prozentuale Werte übertragen werden.

In der Windenergieanlage wird dann entsprechend der Anlagensollleistung $P_{AS}$ eine eingespeiste Anlagenistleistung $P_{AI}$ abgegeben und eingespeist. Auch diese Umsetzung beinhaltet Dynamiken einschließlich einer Dynamik zum Empfang der Sollwerte und einer Dynamik zum Umsetzen der Sollwerte in tatsächliche Istwerte, also tatsächlich abgegebene Leistung.

Figur 4 zeigt schematisch einen geschlossenen Regelkreis 400, der die vereinfachte Regelstrecke 300 gemäß Figur 3 beinhaltet. Nur aus Gründen der Darstellung wird die erfasste Netzspannung $U_{Ne}$ von unten in die zentrale Parksteuereinheit 302 eingegeben, inhaltlich entspricht diese zentrale Parksteuereinheit 302 der Figur 4 aber der der Figur 3, weswegen auch gleiche Bezugszeichen verwendet wurden. Auch ansonsten wurden für ähnliche Elemente gleiche Bezugszeichen verwendet, was nicht ausschließen soll, dass dennoch Detailabweichungen vorhanden sein können.

Figur 4 zeigt in dem geschlossenen Regelkreis 400 zusätzlich noch einen Netzblock 406, der ein elektrisches Versorgungsnetz, oder einen Abschnitt davon, oder insbesondere ein Inselnetz veranschaulichen soll bzw. dafür repräsentativ ist. Figur 4 zeigt damit insgesamt, dass eine frequenzabhängige Leistung von der Parksteuereinheit 302 vorgegeben wird, von der Windenergieanlage 304 bzw. mehreren Windenergieanlagen umgesetzt und in das elektrische Versorgungsnetz gemäß Netzblock 406 eingespeist wird.

Das elektrische Versorgungsnetz reagiert darauf und kann seine Netzspannung $U_{Ne}$ ändern. Diese Änderung kann eine Frequenzänderung beinhalten, was wiederum in der zentralen Parksteuereinheit 302 erfasst wird. Damit liegt tatsächlich ein Regelkreis vor, in dem bzw. mit dem das elektrische Versorgungsnetz geregelt wird. Es ändert sich dadurch die Netzfrequenz, die zurückgeführt wird und dadurch wiederum auf die Regelstrecke einwirkt. Besonders wird vorgeschlagen zu berücksichtigen, dass hier tatsächlich ein geschlossener Regelkreis vorliegt.

Zum Prüfen von Eigenschaften einer solchen vereinfachten Regelstrecke 300 gemäß Figur 3 bzw. eines geschlossenen Regelkreises 400 gemäß Figur 4 ist ein Simulationsaufbau gemäß Figur 5 vorgesehen. Einleitend wurden oben mögliche Frequenzoszillationen beschrieben und solche könnten grundsätzlich durch eine Dämpfung in der Regelstrecke behoben werden, sodass die Vorgabe einer entsprechenden zumindest minimalen internen Dämpfung der Regelstrecke in Betracht kommen kann. Ob eine solche Dämpfung erfüllt wird, muss daher nach einem festgelegten Schema geprüft werden können. Dafür kann der Simulationsaufbau 500 gemäß Figur 5 verwendet werden. Dieser beinhaltet eine zentrale Parksteuereinheit 302 und eine Windenergieanlage 304, die repräsentativ für mehrere Windenergieanlagen bzw. alle Windenergieanlagen eines Windparks zusammen stehen kann. Die Bezugszeichen hierzu sind wie in den Figuren 3 und 4 gewählt, da die Elemente gleich sein können oder zumindest ähnlich sind.

Außerdem ist als elektrisches Versorgungsnetz 506 eine vereinfachte Anordnung gewählt mit einer variablen Last 508 und einem Phasenschieber 510. Der Phasenschieber 510, der insbesondere im Wesentlichen eine Synchronmaschine im Leerlauf bezeichnen kann, gibt im Grunde die Netzspannung $U_{Ne}$ mit der Netzfrequenz vor, weist aber selbst keine Dämpfung auf. Bei Wahl einer kleinen Synchronmaschine als Phasenschieber wirken sich entsprechend Veränderungen der eingespeisten Leistung stärker auf das Verhalten dieser Synchronmaschine aus, und es kann besonders leicht zu Schwingungen kommen, da zumindest der Phasenschieber 510, also die verwendete Synchronmaschine selbst, keine oder keine nennenswerte Dämpfung aufweist. Dadurch kann somit geprüft werden, ob eine ausreichende innere Dämpfung in der vereinfachten Regelstrecke 300, die sich in Figur 5 auch wiederfindet, gegeben ist.

Es kann also sein, dass eine minimale interne Dämpfung der Regelstrecke, besonders der Regelstrecke 300, gefordert wird. Um die minimale interne Dämpfung der Regelstrecke, besonders von Typ-2-Anlagen, auszuwerten, wird ein Simulationsszenario vorgeschlagen, das Figur 3 zeigt. Darin werden Typ-2-Anlagen in einem fiktiven dämpfungslosen Inselnetz parallel mit variablen Lasten und einer kleinen Synchronmaschine als Phasenschieber betrieben, wie Figur 5 zeigt. Da in einem solchen fiktiven Simulationsszenario die Lasten spannungs- und frequenzunabhängig und die kleine Synchronmaschine reibungsfrei angenommen wird, bleibt die Regelstrecke der Typ-2-Anlage, also die vereinfachte Regelstrecke 300, als die einzige mögliche Quelle für die Einprägung der Dämpfung in diesem geschlossenen Regelkreis. Damit ließe sich eine geforderte interne Dämpfung der Regelstrecke bei einem Nachweisführungsprozess auswerten.

Besonders wurde auch ausgehend für die vorgeschlagene Lösung angenommen, dass bisherige Regelungen zum Erzeugen einer frequenzabhängigen Leistungsvorgabe sehr schwach oder gar nicht gedämpft waren. In der Simulationsanordnung 500 gemäß Figur 5 würde eine solche vereinfachte Regelstrecke 300 ohne oder mit sehr geringer Dämpfung zum Schwingen neigen.

Figur 6 zeigt schematisch und in einer vereinfachten Art und Weise einen Leistungssteuerkreis 600. Dieser weist einen Frequenzerfassungsblock 612 auf, der aus der erfassten Netzspannung $U_{Ne}$ eine Frequenz bzw. Frequenzabweichung df bestimmt. Die Frequenzabweichung df ist eine Abweichung von einer Netznennfrequenz. Diese Frequenzabweichung df wird in den Tiefpassfilterblock 614 gegeben, sodass das Ergebnis ein Frequenzfiltersignal $df_F$ ist. Dieses wird in dem Leistungsregelungsblock 616 in einen frequenzabhängigen Sollleistungsanteil dPs umgerechnet. Das kann mithilfe einer Statik erfolgen, bei der jeder Frequenzabweichung von der Nennfrequenz ein Leistungswert zugeordnet ist. Dieser frequenzabhängige Sollleistungsanteil dPs kann in dem Begrenzungsblock 618 begrenzt werden.

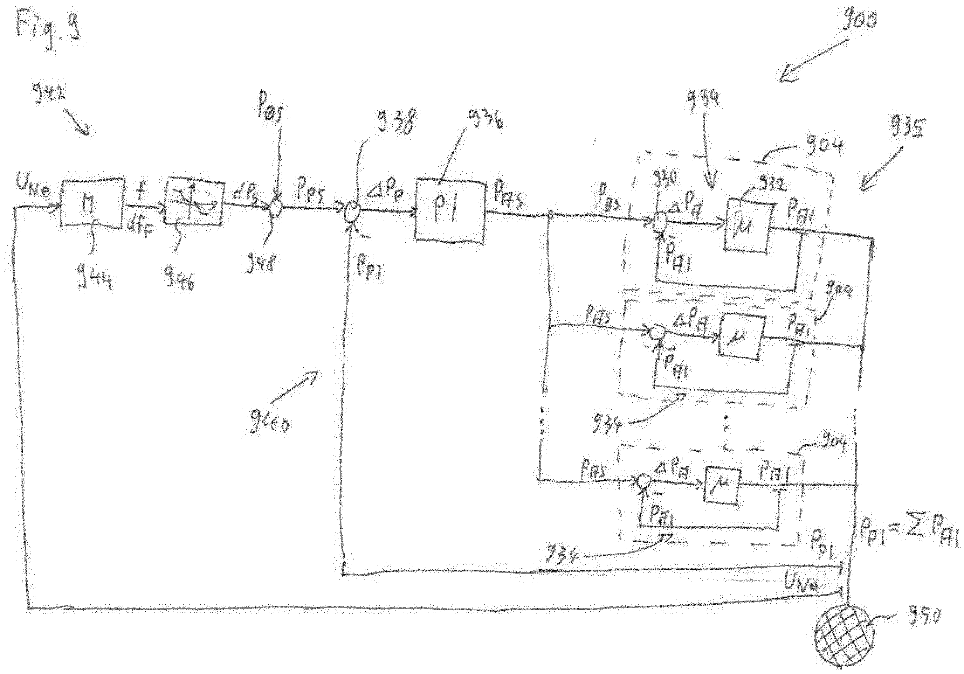

Das Ergebnis ist dann ein begrenzter Sollleistungsanteil $dP_{SL}$. Zu diesem begrenzten Sollleistungsanteil $dP_{SL}$ kann ein Sollleistungsgrundanteil $P_{0S}$ zuaddiert werden, nämlich in der Summierstelle 620. Das Ergebnis ist dann eine Parksollleistung $P_{PS}$. Diese Parksollleistung kann dann weiterverarbeitet werden, was noch im Zusammenhang mit Figur 9 näher erläutert wird. Besonders kommt in Betracht, dass diese Parksollleistung $P_{PS}$ mit einer Parkistleistung verglichen wird, um abhängig davon die Anlagensollleistung $P_{AS}$ zu bestimmen. Dabei kann hinzukommen, die Parksollleistung $P_{PS}$ in einen prozentualen Wert umzurechnen, wenn die Anlagensollleistung $P_{AS}$ als prozentualer Wert gewünscht ist.

Eine solche Leistungssteuerstruktur 600 weist somit einige dynamische Elemente auf, und dazu gehört auch der Tiefpassfilterblock 614. Dieser kann eingestellt werden, um zu versuchen, eine gewünschte Schnelligkeit und auch gewünschte Stabilität zu erreichen.

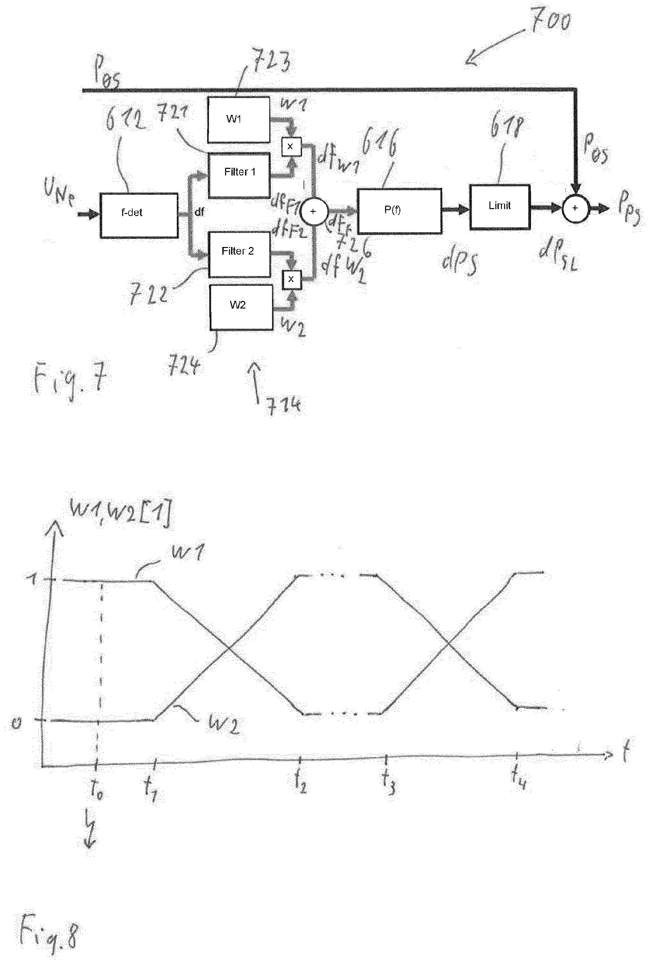

Zur Verbesserung wird eine Leistungssteuerstruktur 700 vorgeschlagen, die in Figur 7 gezeigt ist. Diese Leistungssteuerstruktur 700 baut auf der Leistungssteuerstruktur 600 der Figur 6 auf. Bis auf die nachfolgend erläuterten Änderungen können diese beiden Leistungssteuerstrukturen 600 und 700 gleich sein und daher werden auch gleiche Bezugszeichen für gleiche oder ähnliche Elemente in Figur 7 wie in Figur 6 verwendet.

Statt dem Frequenzfilterblock 614 verwendet die Leistungssteuerstruktur 700 eine Filtereinrichtung 714.

Die Filtereinrichtung 714 weist eine erste und zweite Filterfunktion 721 und 722 auf. Beide Filterfunktionen 721 und 722 sind jeweils als Tiefpassfilter ausgebildet. Die erste Filterfunktion hat dabei eine kleinere Zeitkonstante als die zweite Filterfunktion 722. Die erste Filterfunktion gibt ein erstes Teilfilterfrequenzsignal $df_{F1}$ aus und die zweite Filterfunktion 722 ein zweites Teilfilterfrequenzsignal $df_{F2}$.

Diese beiden Teilfilterfrequenzsignale $df_{F1}$ bzw. $df_{F2}$ werden dann jeweils mit einem ersten bzw. zweiten Gewichtungsfaktor W1 bzw. W2 multipliziert. Diese beiden Gewichtungsfaktoren W1 und W2 werden jeweils in einem ersten bzw. zweiten Gewichtungsblock 723 bzw. 724 erzeugt bzw. eingestellt.

Das Ergebnis ist jeweils ein erstes bzw. zweites gewichtetes Filtersignal $df_{W1}$ bzw. $df_{W2}$. Diese werden an der Summierstelle 726 aufeinander aufaddiert und bilden das Frequenzfiltersignal $df_F$.

Im Grunde kann durch diesen vorgeschlagenen Aufbau der Filtereinrichtung 714 erreicht werden, dass - vereinfacht ausgedrückt - die Frequenzabweichung df den oberen oder unteren Pfad nimmt. Der obere Pfad ist schneller und führt zu einem schnelleren Regelergebnis, wohingegen der untere Pfad langsamer und damit stabiler ist. Dadurch, dass die Gewichtungsfaktoren W1 und W2 kontinuierlich verändert werden können, kann ein fließender Übergang dazwischen gesteuert werden, dass die Frequenzabweichung df den oberen oder unteren Pfad nimmt.

Beispielsweise kann ein kontinuierlicher Übergang durch Vorgabe einer Rampenfunktion an die erste und zweite Gewichtung W1 und W2 erreicht werden. Der erste und zweite Gewichtungsblock 723 und 724 können eine entsprechende Flanke vorgeben, bei der beispielsweise der erste Gewichtungsfaktor W1 über eine zeitliche Flanke von 1 auf 0 abgesenkt wird, während der zweite Gewichtungsblock 724 den zweiten Gewichtungsfaktor W2 mit einer zeitlichen Rampe von 0 auf 1 ansteigen lässt. Ist der erste Gewichtungsfaktor W1 gleich 1 und der zweite gleich 0, so nimmt die Frequenzabweichung nur den Weg über den oberen Pfad, wird also schnell gefiltert. Ist der erste Gewichtungsfaktor W1 gleich 0 und der zweite 1, nimmt die Frequenzabweichung df den Weg über den unteren Pfad und wird somit langsamer gefiltert.

Mit der Leistungssteuerungsstruktur 700 kann somit, besonders mit der Filtereinrichtung 714, ein Lösungsvorschlag realisiert werden, bei dem zunächst die ermittelte Frequenz parallel mindestens mit zwei unterschiedlichen Zeitkonstanten mit einem Tiefpass gefiltert wird. Vorzugsweise ist die eine Zeitkonstante klein und die andere groß.

Es wird dann ein Mittelwert aus den Ausgängen dieses vorherigen Schritts, also der parallelen Filterung ermittelt, wobei die Ausgänge durch unterschiedliche Faktoren gewichtet werden, nämlich die Gewichtungsfaktoren W1 und W2, bei noch mehr Filtern entsprechend mehr Gewichtungsfaktoren. Werden im gezeigten Beispiel beide Gewichtungsfaktoren auf 0,5 gesetzt, wird die Summierstelle 726 ein arithmetisches Mittel ausgeben.

Vorzugsweise werden die Gewichtungsfaktoren über die Zeit angepasst, wobei zu jedem Zeitpunkt die Summe aller Gewichtungsfaktoren gleich 1 ist. Eine mögliche Anpassungsweise der Gewichtungsfaktoren kann so sein, dass der Gewichtungsfaktor des Filters mit der kleinen Zeitkonstante nach der Detektion einer Frequenzstörung größer gewählt wird, insbesondere gleich 1 gewählt wird, und nach einer beabsichtigten Verzögerungszeit rampenartig auf ein Minimum reduziert wird, um dadurch zur Stabilisierung der Frequenz beizutragen.

Durch die zeitliche Anpassung der Gewichtungsfaktoren ist es möglich, zu Beginn einer Frequenzstörung schnell zu reagieren, nämlich durch den hohen Gewichtungsfaktor des Filters mit der kleinen Zeitkonstante. Somit können die Anforderungen an die Stellgeschwindigkeit des frequenzabhängigen Leistungsreglers unberührt von den Modifikationen zur Einführung der Dämpfung erfüllt werden. Nach einer einstellbaren Zeit, oder anderem Kriterium, lässt sich eine interne Dämpfung durch Reduktion des Gewichtungsfaktors des Filters mit der kleinen Zeitkonstante und zugleich Erhöhung des Gewichtungsfaktors des Filters mit der großen Zeitkonstante erzielen.

Ein möglicher Verlauf der beiden Gewichtungsfaktoren W1 und W2 ist im Diagramm der Figur 8 dargestellt.

Figur 8 zeigt somit ein Zeitdiagramm, in dem ein möglicher Verlauf der beiden Gewichtungsfaktoren W1 und W2 dargestellt ist. Bis zu einer Zeit $t_0$ wird von einem Stabilbetrieb ausgegangen, in dem in das elektrische Versorgungsnetz eingespeist wird, das fehlerfrei und stabil arbeitet. Zum Zeitpunkt $t_0$ tritt dann ein Netzfehler auf, der beispielsweise einen Frequenzsprung zur Folge haben kann. Das Netz arbeitet dann nicht mehr stabil und ein Schwingungsrisiko tritt auf. Die beiden Gewichtungsfaktoren W1 und W2 werden aber zunächst unverändert belassen. Es bleibt also die Situation, dass durch den Gewichtungsfaktor W1 der erste Tiefpassfilter mit kleiner Zeitkonstanten aktiv ist, und der zweite Tiefpassfilter inaktiv ist, weil der zweite Gewichtungsfaktor W2 den Wert 0 hat. Mit dieser Einstellung liegt also ein schnelles Regelverhalten vor und somit können auch Frequenzänderungen schnell eine frequenzabhängige Leistung verändern.

Es wird dann eine Übergangszeit abgewartet und dann zum Zeitpunkt $t_1$ der erste Gewichtungsfaktor W1 mit einer Rampe bis zum Zeitpunkt $t_2$ auf 0 abgesenkt, und zeitgleich der zweite Gewichtungsfaktor W2 mit einer Rampe bis zum Zeitpunkt $t_2$ auf den Wert 1 angehoben. Insoweit kann der Abstand zwischen $t_0$ und $t_1$ die Übergangszeit bilden.

Der Abstand zwischen den Zeiten $t_1$ und $t_2$ kann im Bereich von 0,1s bis 30s, insbesondere 1s bis 10 s liegen.

Ab dem Zeitpunkt tz wird dann zunächst angenommen, dass das Netz noch nicht stabil arbeitet oder zumindest noch Instabilitäten und insbesondere noch eine Tendenz zum Schwingen zu erwarten ist. Entsprechend wird die Aufteilung mit dem Gewichtungsfaktor W1 = 0 und dem Gewichtungsfaktor W2 = 1 bis zum Zeitpunkt ts beibehalten. Der Zeitpunkt ts kann beispielsweise 1 bis 10 s nach dem Zeitpunkt $t_2$ liegen, aber auch bis zu 1 min oder sogar bis zu 5 min. Es kommt in Betracht, dass das Netz beobachtet wird und solange noch eine gewisse Schwingamplitude zu verzeichnen ist, noch von einem nicht ganz stabilen oder zumindest noch nicht vollständig erholten Netz ausgegangen.

Zum Zeitpunkt ts wird dann aber angenommen, dass sich das Netz wieder erholt hat und stabil arbeitet. Dann werden die beiden Gewichtungsfaktoren wieder zurückgefahren. Der erste Gewichtungsfaktor W1 kann also vom Zeitpunkt ts bis zum Zeitpunkt $t_4$ mit einer Rampe von 0 auf 1 hochgefahren werden, während der zweite Gewichtungsfaktor W2 vom Zeitpunkt ts bis zum Zeitpunkt $t_4$ mit einer Rampe von 1 auf 0 heruntergefahren werden kann. Zum Zeitpunkt $t_4$ hat also der erste Gewichtungsfaktor dann den Wert 1 und der zweite Gewichtungsfaktor den Wert 0 erreicht. Ab dem Zeitpunkt $t_4$ ist dann wieder von einem Stabilbetrieb auszugehen.

Die Figur 8 ist ein veranschaulichendes Beispiel, in dem die Gewichtungsfaktoren W1 und W2 zwischen 1 und 0 bzw. 0 und 1, also zwischen 100% und 0% bzw. 0% und 100% wechseln. Vorzugsweise ist aber vorgesehen, dass W1 zwar den Wert 1 bzw. 100% erreicht, aber nicht bis auf 0, sondern nur bis auf einen geringen Wert abfällt, der im Bereich von 5% bis 20% liegen kann, insbesondere wird vorgeschlagen, dass W1 nur auf etwa 10% abfällt und entsprechend W2 zwar den Wert 0 annehmen kann, aber nur entsprechend auf einen großen Wert von 80% bis 95% ansteigt. Bezogen auf das Diagramm der Figur 8 bedeutet das, dass W1 im Bereich zwischen $t_2$ bis ts einen geringen Wert größer als 0 annimmt, bspw. 10%, und W2 im Bereich zwischen $t_2$ bis ts einen großen Wert kleiner als 1 annimmt, bspw. 90%.

Figur 9 zeigt schematisch eine Kaskadenregelungsstruktur und somit einen Kaskadenregler 900 für einen Windpark. Dieser Windpark weist diverse Windenergieanlagen 904 auf, die hier nur hinsichtlich der zu erläuternden Kaskadenregelungsstruktur durch die gestrichelten Umrandungen angedeutet sind. Jede dieser Windenergieanlagen 904 gibt eine Anlagenistleistung $P_{AI}$ aus, die für alle Windenergieanlagen gleich bezeichnet sind, auch wenn sie nicht identische Signale sind. Gleiches gilt für die übrigen Elemente der einzelnen Windenergieanlagen 904.

Diese Anlagenistleistung $P_{AI}$ wird auf eine Anlagensollleistung $P_{AS}$ ausgeregelt, indem die Anlagenistleistung $P_{AI}$ an einem ersten Summierglied 930 von einer vorgegebenen Anlagensollleistung $P_{AS}$ abgezogen wird. Es ergibt sich die Anlagendifferenzleistung $\Delta P_A$ als Regelabweichung, die in den Anlagenregler 932 gegeben wird, der die Windenergieanlage so steuert, dass die erzeugte Anlagenistleistung $P_{AI}$ entsprechend auf die Anlagensollleistung $P_{AS}$ ausgeregelt wird. Somit bildet diese Rückführung zum ersten Summierglied zusammen mit dem Anlagenregler 932 einen inneren Regelkreis 934.

Alle der Windenergieanlagen 904 sind so aufgebaut, weisen somit diesen inneren Regelkreis 934 auf und erzeugen insgesamt die Parkistleistung $P_{PI}$, die die Summe über alle Anlagenistleistungen $P_{AI}$ ist. Diese Parkistleistung $P_{PI}$ wird dann in das elektrische Versorgungsnetz 950 eingespeist. Damit wird im Ergebnis auch die Parkistleistung $P_{PI}$ durch all diese inneren Regelkreise 934 ausgeregelt. Die inneren Regelkreise 934 bilden somit auch in ihrer Gesamtheit zusammen einen inneren Regelkreis für den Windpark, der somit als innerer Parkregelkreis 935 bezeichnet werden kann.

Weiterhin ist ein Parkleistungsregler 936 vorgesehen, der die Anlagensollleistung $P_{AS}$ bestimmt, die somit für diesen Parkleistungsregler 936 eine Stellgröße bildet, die an die Windenergieanlage gegeben wird.

Der Parkleistungsregler 936 erhält eine Differenzparkleistung $\Delta P_P$ als Regelfehler zwischen einem Parkleistungssollwert $P_{PS}$ und dem Parkleistungsistwert $P_{PI}$. Die Differenz wird an dem zweiten Summierglied 938 gebildet.

Dieser Parkleistungsregler 936 bildet somit einen weiteren, nämlich mittleren Regelkreis 940. Er ist dem inneren Parkregelkreis 935, der aus den inneren Regelkreisen 934 gebildet wird, überlagert.

Dieser mittlere Regelkreis 940 bzw. der Parkleistungsregler 936 erhalten den Parkleistungssollwert $P_{PS}$ von einem äußeren Regelkreis 942. Dieser äußere Regelkreis erfasst eine Netzspannung $U_{Ne}$ mit dem Messblock 944, der daraus die Netzfrequenz f erfasst. In dem Messblock 944 erfolgt eine Frequenzbestimmung, aber auch eine Filterung, und insbesondere die Filtereinrichtung 714 gemäß Figur 7 kann zusammen mit dem Frequenzerfassungsblock 612, ebenfalls gemäß Figur 7, in dem Messblock 944 enthalten sein.

Der Messblock 944 kann somit idealerweise auch die Filterfrequenz bzw. das Filterfrequenzsignal $df_F$ ausgeben. Dieses Filterfrequenzsignal $df_F$ wird dann an den frequenzabhängigen Leistungssteuerungsblock 946 gegeben, der eine Statik enthalten kann. Diese Statik kann einen Zusammenhang zwischen eingegebener Frequenz und auszugebender Leistung bilden. Der frequenzabhängige Leistungssteuerblock 946 gibt somit einen frequenzabhängigen Sollleistungsanteil dPs aus. Zu diesem wird an dem dritten Summierglied 948 noch ein Sollleistungsgrundanteil $P_{0S}$ addiert. Das Ergebnis ist die Parksollleistung $P_{PS}$, die an den mittleren Regelkreis 940 weitergegeben wird.

Die inneren Regelkreise 934 der einzelnen Windenergieanlagen 904 können also als innerer Parkregelkreis 935 zusammengefasst werden bzw. als ein solcher angesehen werden. Zum Steuern des Einspeisens der elektrischen Leistung mittels eines Windparks wird somit ein Kaskadenregler 900 vorgeschlagen, der den inneren Parkregelkreis 335, den mittleren Regelkreis 940 und den äußeren Regelkreis 942 aufweist.

Der äußere Regelkreis umfasst dabei den Messblock 944, in dem vorgeschlagen wird, eine Zeitkonstante mittels der enthaltenen Filtereinrichtung 714 einzustellen. Dadurch ist es möglich, situationsabhängig den äußeren Regelkreis 942 langsamer als den mittleren und/oder inneren Regelkreis zu machen. Es kann aber auch vorgesehen sein, den äußeren Regelkreis 942 schneller zu machen, besonders dann, wenn von einem stabilen Versorgungsnetz 950 ausgegangen wird.

**Patentansprüche**

1. Verfahren zum Einspeisen elektrischer Leistung in ein eine Netzspannung mit einer Netzfrequenz aufweisendes elektrisches Versorgungsnetz, mittels einer Einspeiseeinheit, insbesondere mittels einer Windenergieanlage oder eines Windparks, umfassend die Schritte

   - Erfassen der Netzfrequenz und weitergeben der erfassten Netzfrequenz als Frequenzmesssignal,
   - Filtern des Frequenzmesssignals mittels einer Filtereinrichtung mit Tiefpassverhalten in ein Frequenzfiltersignal,
   - Bestimmen eines frequenzabhängigen Leistungssollwertanteils in Abhängigkeit von dem Frequenzfiltersignal, und
   - Einspeisen elektrischer Leistung in Abhängigkeit von dem frequenzabhängigen Leistungssollwertanteil, wobei
   - zum Filtern des Frequenzmesssignals mittels der Filtereinrichtung mit Tiefpassverhalten wenigstens eine erste und eine zweite Filterfunktion mit Tiefpassverhalten mit charakteristischer erster bzw. zweiter Tiefpasszeitkonstanten verwendet werden, und
   - zwischen der ersten und zweiten Filterfunktion ganz oder teilweise gewechselt werden kann, insbesondere mittels eines ersten und/oder zweiten Gewichtungsfaktors.

2. Verfahren nach Anspruch 1, **dadurch gekennzeichnet, dass**

   - die erste und zweite Filterfunktion zueinander parallel arbeiten,
   - mit dem ersten bzw. zweiten Gewichtungsfaktor gewichtet werden und
   - durch Veränderung der Gewichtungsfaktoren zwischen den Filterfunktionen gewechselt werden kann.

3. Verfahren nach Anspruch 1 oder 2, **dadurch gekennzeichnet, dass**

   - die erste und zweite Filterfunktion das Frequenzmesssignal in ein erstes bzw. zweites Teilfiltersignal filtern und

- das erste und zweite Teilfiltersignal mit dem ersten bzw. zweiten Gewichtungsfaktor gewichtet zu dem Frequenzfiltersignal, oder einem Teil davon, aufaddiert werden, wobei
- der erste und zweite Gewichtungsfaktor veränderbar sind.

4. Verfahren nach einem der vorstehenden Ansprüche, **dadurch gekennzeichnet, dass**

- der erste und der zweite Gewichtungsfaktor zum Gewichten der ersten bzw. zweiten Filterfunktion nur so verändert werden, dass ihre Summe konstant bleibt, insbesondere eins ist.

5. Verfahren nach einem der vorstehenden Ansprüche, **dadurch gekennzeichnet, dass**

- die zweite Tiefpasszeitkonstante in Abhängigkeit von einer Systemeigenfrequenz des mit der Einspeiseeinheit gekoppelten elektrischen Versorgungsnetzes gewählt wird, insbesondere so, dass
- die zweite Tiefpasszeitkonstante größer gewählt wird als ein Kehrwert der Systemeigenfrequenz.

6. Verfahren nach einem der vorstehenden Ansprüche, **dadurch gekennzeichnet, dass**

- die erste und zweite Tiefpasszeitkonstante zur Anpassung an eine Systemveränderung und/oder geänderte Systemanforderung veränderlich sind, wobei eine Beschränkung so vorgesehen ist, dass eine Veränderung nur so erfolgt, dass die erste Tiefpasszeitkonstante kleiner als die zweite ist.

7. Verfahren nach einem der vorstehenden Ansprüche, **dadurch gekennzeichnet, dass**

- die erste Tiefpasszeitkonstante kleiner als die zweite Tiefpasszeitkonstante ist, und
- in einem Stabilbetrieb, wenn kein Netzfehler identifiziert wurde, oder nach einem Netzfehler ein stabiler Zustand erreicht ist, der erste Gewichtungsfaktor größer als der zweite gewählt wird, insbesondere der erste Gewichtsfaktor zu 1 und der zweite zu 0 gewählt wird,
- in einem Störfallbetrieb nach einem Identifizieren eines Netzfehlers, insbesondere nach Ablauf einer Übergangszeit, der erste Gewichtungsfaktor verkleinert und derzweite Gewichtungsfaktor vergrößert wird, insbesondere so, dass der erste Gewichtungsfaktor auf einen kleinen Wert im Bereich von 5% bis 20% verringert und der zweite Gewichtungsfaktor auf einen großen Wert im Bereich von 80% bis 95% erhöht wird, und
- nach dem Störfallbetrieb, insbesondere nach Ablauf einer Sicherheitszeit und/oder nach Erfüllen eines Stabilitätskriteriums, eine Rückkehr in den Stabilbetrieb durchgeführt wird, in dem der erste Gewichtungsfaktor wieder erhöht wird, insbesondere auf 1, und der zweite Gewichtungsfaktor wieder verringert wird, insbesondere auf 0.

8. Verfahren nach einem der vorstehenden Ansprüche, **dadurch gekennzeichnet, dass**

- wenn die erste Tiefpasszeitkonstante kleiner als die zweite Tiefpasszeitkonstante ist,

- in einem bzw. dem Störfallbetrieb nach einem Identifizieren eines Netzfehlers, insbesondere nach Ablauf einer bzw. der Übergangszeit, der erste Gewichtungsfaktor kontinuierlich, insbesondere mit einer zeitlichen Rampenfunktion, verkleinert und der zweite Gewichtungsfaktor damit synchron vergrößert wird, insbesondere so, dass der erste Gewichtungsfaktor auf einen kleinen Wert im Bereich von 5% bis 20% verringert und der zweite Gewichtungsfaktor auf einen großen Wert im Bereich von 80% bis 95% erhöht wird, und/oder
- nach dem Störfallbetrieb, insbesondere nach Ablauf einer bzw. der Sicherheitszeit und/oder nach Erfüllen eines bzw. des Stabilitätskriteriums, eine Rückkehr in den Stabilbetrieb eingeleitet und insbesondere durchgeführt wird, indem der erste Gewichtungsfaktor kontinuierlich, insbesondere mit einer zeitlichen Rampenfunktion, wieder erhöht wird, insbesondere auf 1, und der zweite Gewichtungsfaktor damit synchron verringert wird, insbesondere auf 0.

9. Verfahren nach einem der vorstehenden Ansprüche, **dadurch gekennzeichnet, dass**

- die Einspeiseeinheit als Windpark mit mehreren Windenergieanlagen ausgebildet ist, und
- das Filtern des Frequenzmesssignals mittels der Filtereinrichtung und das Bestimmen des frequenzabhängigen Leistungssollwertanteils in einer zentralen Parksteuereinheit erfolgt, und in Abhängigkeit von dem frequenzabhängigen Leistungssollwertanteil ein einzuspeisender Leistungssollwert an die Windenergieanlagen übertragen wird, wobei insbesondere
- der Leistungssollwert als Summe aus dem frequenzabhängigen Leistungssollwertanteil, ggf. nach weiterer Umformung, und einem vorbestimmbaren Sollleistungsgrundwert gebildet wird.

10. Verfahren nach einem der vorstehenden Ansprüche, **dadurch gekennzeichnet, dass**

- der frequenzabhängige Leistungssollwertanteil mittels einer Begrenzungsfunktion auf eine Leistungsgrenze begrenzt wird, um einen begrenzten Sollwertanteil zu bilden, und
- der begrenzte Sollwertanteil auf einen bzw. den Sollleistungsgrundwert aufaddiert wird, um einen bzw. den Leistungssollwert für die insgesamt einzuspeisende Leistung zu bilden, wobei insbesondere
- der Sollleistungsgrundwert so gewählt wird, dass er um die Leistungsgrenze unter einer verfügbaren Leistung, insbesondere aus Wind verfügbaren Leistung liegt, wenn die Erzeugungseinheit eine Windenergieanlage oder ein Windpark ist.

11. Verfahren nach einem der vorstehenden Ansprüche, **dadurch gekennzeichnet, dass**

- die erste und zweite Filterfunktion jeweils wenigstens durch eine Filtereinheit realisiert sind aus der Liste aufweisend

- ein PT1-Glied, und
- ein PT2-Glied mit einem Dämpfungsgrad D>1, und
- eine Mittelwerteinheit zum Durchführen einer laufenden Mittelwertbildung und
- ein Filter mit zu einem PT1-Glied oder PT2-Glied mit einem Dämpfungsgrad D>1 ähnlichem Verhalten, und
- ein Filterelement mit einer vorgebbaren Zeitkonstante und mit einer Sprungantwort ohne Überschwinger.

12. Verfahren nach einem der vorstehenden Ansprüche, **dadurch gekennzeichnet, dass**

- zum Einspeisen der elektrischen Leistung ein Windpark mit einer einen Parkleistungsregler aufweisenden Parksteuereinheit und mit mehreren Windenergieanlagen verwendet wird, der einen Kaskadenregler mit drei Regelkreisen aufweist, mit
- einem inneren Regelkreis [, in dem jede der Windenergieanlagen eine abgegebene Leistung auf eine durch den Parkleistungsregler vorgegebene Anlagensollleistung regelt,
- einem mittleren Regelkreis, in dem der Parkleistungsregler die Anlagenleistung in Abhängigkeit von einem Vergleich zwischen einem Parkleistungssollwert und einem Parkleistungsistwert als Stellgröße bestimmt und an die Windenergieanlagen als Anlagensollleistung überträgt, und
- einem äußeren Regelkreis, in dem in Abhängigkeit von der erfassten Netzfrequenz der Leistungssollwertanteil und davon abhängig der Parkleistungssollwert als Stellgröße bestimmt und an den Parkleistungsregler übergeben wird, wobei
- die Filtereinrichtung mit Tiefpassverhalten zum Filtern des Frequenzmesssignals Teil des äußeren Regelkreises ist und
- die zweite Tiefpasszeitkonstante, wenn die größer als die erste Tiefpasszeitkonstante ist, so gewählt wird, dass der äußere Regelkreis ein langsameres Zeitverhalten als der mittlere und/oder innere Regelkreis aufweist, wenn der zweite Gewichtungsfaktor zu 1 gewählt wird, oder gegenüber dem ersten Gewichtungsfaktor zumindest dominant ist, insbesondere einen Wert im Bereich von 80% bis 95% aufweist, wobei insbesondere
- die erste Tiefpasszeitkonstante so gewählt wird, dass der äußere Regelkreis kein langsameres Zeitverhalten als der mittlere und/oder innere Regelkreis aufweist, wenn der erste Gewichtungsfaktor zu 1 gewählt wird, oder gegenüber dem zweiten Gewichtungsfaktor zumindest dominant ist, insbesondere einen Wert im Bereich von 80% bis 95% aufweist, und/oder
- der äußere Regelkreis, wenn die Filterfunktion überbrückt wäre, kein langsameres Zeitverhalten als der mittlere und/oder innere Regelkreis aufweist.

13. Einspeiseeinheit, insbesondere Windenergieanlage oder Windpark zum Einspeisen elektrischer Leistung in ein eine Netzspannung mit einer Netzfrequenz aufweisendes elektrisches Versorgungsnetz, wobei die Einspeiseeinheit dazu vorbereitet ist, ein Verfahren mit folgenden Schritten auszuführen

- Erfassen der Netzfrequenz und weitergeben der erfassten Netzfrequenz als Frequenzmesssignal,
- Filtern des Frequenzmesssignals mittels einer Filtereinrichtung mit Tiefpassverhalten in ein Frequenzfiltersignal,
- Bestimmen eines frequenzabhängigen Leistungssollwertanteils in Abhängigkeit von dem Frequenzfiltersignal, und
- Einspeisen elektrischer Leistung in Abhängigkeit von dem frequenzabhängigen Leistungssollwertanteil, wobei
- zum Filtern des Frequenzmesssignals mittels der Filtereinrichtung mit Tiefpassverhalten wenigstens eine erste und eine zweite Filterfunktion mit Tiefpassverhalten mit charakteristischer erster bzw. zweiter Tiefpasszeitkonstanten verwendet werden, und
- zwischen der ersten und zweiten Filterfunktion ganz oder teilweise gewechselt werden kann, insbesondere mittels eines ersten und/oder zweiten Gewichtungsfaktors.

14. Einspeiseeinheit nach Anspruch 13, **dadurch gekennzeichnet, dass**

    - eine zentrale Steuereinheit vorgesehen ist, insbesondere eine zentrale Parksteuereinheit, wenn die Einspeiseeinheit ein Windpark ist, und
    - die Einspeiseeinheit dazu vorbereitet ist, ein Verfahren nach einem der Ansprüche 1 bis 12 auszuführen, insbesondere, dass die zentrale Steuereinheit dazu vorbereitet ist, das Verfahren auszuführen.

15. Einspeiseeinheit nach Anspruch 13 oder 14, **dadurch gekennzeichnet, dass** die Einspeiseeinheit

    - zum Einspeisen der elektrischen Leistung einen Windpark mit einer einen Parkleistungsregler aufweisenden Parksteuereinheit und mit mehreren Windenergieanlagen aufweist, der einen Kaskadenregler mit drei Regelkreisen aufweist, mit
    - einem inneren Regelkreis, in dem jede der Windenergieanlagen eine abgegebene Leistung auf eine durch den Parkleistungsregler vorgegebene Anlagensollleistung regelt,
    - einem mittleren Regelkreis, in dem der Parkleistungsregler die Anlagensollleistung in Abhängigkeit von einem Vergleich zwischen einem Parkleistungssollwert und einem Parkleistungsistwert als Stellgröße bestimmt und an die Windenergieanlagen als Anlagensollleistung überträgt, und
    - einem äußeren Regelkreis, in dem in Abhängigkeit von der erfassten Netzfrequenz der Leistungssollwertanteil und davon abhängig der Parkleistungssollwert als Stellgröße bestimmt und an den Parkleistungsregler übergeben wird, wobei
    - die Filtereinrichtung mit Tiefpassverhalten zum Filtern des Frequenzmesssignals Teil des äußeren Regelkreises ist und
    - die zweite Tiefpasszeitkonstante, wenn die größer als die erste Tiefpasszeitkonstante ist, so gewählt wird, dass der äußere Regelkreis ein langsameres Zeitverhalten als der mittlere und/oder innere Regelkreis aufweist, wenn der zweite Gewichtungsfaktor zu 1 gewählt wird, oder gegenüber dem ersten Gewichtungsfaktor zumindest dominant ist, insbesondere einen Wert im Bereich von 80% bis 95% aufweist, wobei insbesondere

- die erste Tiefpasszeitkonstante so gewählt wird, dass der äußere Regelkreis kein langsameres Zeitverhalten als der mittlere und/oder innere Regelkreis aufweist, wenn der erste Gewichtungsfaktor zu 1 gewählt wird, oder gegenüber dem zweiten Gewichtungsfaktor zumindest dominant ist, insbesondere einen Wert im Bereich von 80% bis 95% aufweist, und/oder
- der äußere Regelkreis, wenn die Filterfunktion überbrückt wäre, kein langsameres Zeitverhalten als der mittlere und/oder innere Regelkreis aufweist.

108

106

101

104

108

110

109

100

108

102

μ 103

105

PCC

Fig. 1

Fig. 2

300

302                    304

$U_{Ne}$ → [ FCU ] $P_{FS}$ → [ WEC ] $P_{RI}$ →

Fig. 3

400

300

302         $P_{FS}$         304         406

[ FCU ] → [ WEC ] $P_{RI}$ → [ Grid ]

$U_{Ne}$ ←

Fig. 4

500

506

570

302    $U_{Ne}$

[ FCU ]

[ WEC ]    [ RL ]    ( G )

508

Fig. 5    300    304

600

$P_{as}$

612    614    $df_F$    616    618    620

$U_{Ne}$ → [ f-det ] df → [ Filter ] → [ P(f) ] → [ Limit ] → (+) → $P_{PS}$

$dP_S$    $dP_{SL}$

Fig. 6

21

Fig. 7

Fig. 8

Fig.9

EP 4 579 979 A1

Europäisches Patentamt
European Patent Office
Office européen des brevets

## EUROPÄISCHER RECHERCHENBERICHT

Nummer der Anmeldung

EP 23 22 0516

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/382029 A1 (HOWARD DUSTIN [US] ET AL) 3. Dezember 2020 (2020-12-03) | 1,2,5, 9-11,13 | INV. H02J3/24 |
| Y | * Absätze [0001] - [0029], [0036], [0047] - [0058]; Abbildungen 1/6-6/6 * | 3,4,6 | F03D7/04 H02J3/38 F03D7/02 |
| | - - - - - | | |
| Y | EP 4 261 409 A1 (SIEMENS GAMESA RENEWABLE ENERGY INNOVATION & TECHNOLOGY SL [ES]) 18. Oktober 2023 (2023-10-18) * Absätze [0001] - [0015], [0022] - [0030]; Abbildungen 1/4-4/4 * | 3,4,6 | |
| | - - - - - | | |
| Y | EP 4 084 261 A1 (WOBBEN PROPERTIES GMBH [DE]) 2. November 2022 (2022-11-02) * Absätze [0006], [0046], [0047], [0119], [0120]; Abbildungen 1-6 * | 6 | |
| | - - - - - | | |
| Y | EP 3 954 896 A1 (WOBBEN PROPERTIES GMBH [DE]) 16. Februar 2022 (2022-02-16) * Absätze [0001] - [0031], [0063], [0077], [0106]; Abbildungen 1-6 * | 6 | |
| | - - - - - | | **RECHERCHIERTE SACHGEBIETE (IPC)** |
| A | CA 3 065 883 A1 (WOBBEN PROPERTIES GMBH [DE]) 20. Dezember 2018 (2018-12-20) * Zusammenfassung; Abbildung 3 * | 1-15 | H02J F03D |
| | - - - - - | | |
| A | AU 2010 227 613 A1 (WOBBEN ALOYS) 6. Oktober 2011 (2011-10-06) * Zusammenfassung; Abbildungen 3-9 * | 1-15 | |
| | - - - - - | | |
| Y | DE 10 2018 116444 A1 (WOBBEN PROPERTIES GMBH [DE]) 9. Januar 2020 (2020-01-09) * Absätze [0001] - [0035], [0060], [0107]; Abbildungen 1-4 * | 6 | |
| | - - - - - | | |

Der vorliegende Recherchenbericht wurde für alle Patentansprüche erstellt

| Recherchenort | Abschlußdatum der Recherche | Prüfer |
|---|---|---|
| München | 12. Juni 2024 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                          EP 23 22 0516

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-06-2024

| Im Recherchenbericht angeführtes Patentdokument | Datum der Veröffentlichung | Mitglied(er) der Patentfamilie | Datum der Veröffentlichung |
|---|---|---|---|
| US 2020382029 A1 | 03-12-2020 | DK 3745588 T3 | 14-08-2023 |
| | | EP 3745588 A1 | 02-12-2020 |
| | | ES 2951517 T3 | 23-10-2023 |
| | | US 2020382029 A1 | 03-12-2020 |
| EP 4261409 A1 | 18-10-2023 | EP 4261409 A1 | 18-10-2023 |
| | | WO 2023198482 A1 | 19-10-2023 |
| EP 4084261 A1 | 02-11-2022 | EP 4084261 A1 | 02-11-2022 |
| | | US 2022352723 A1 | 03-11-2022 |
| EP 3954896 A1 | 16-02-2022 | EP 3954896 A1 | 16-02-2022 |
| | | US 2022049679 A1 | 17-02-2022 |
| CA 3065883 A1 | 20-12-2018 | BR 112019026398 A2 | 06-10-2020 |
| | | CA 3065883 A1 | 20-12-2018 |
| | | CN 110770994 A | 07-02-2020 |
| | | DE 102017113006 A1 | 13-12-2018 |
| | | EP 3639339 A1 | 22-04-2020 |
| | | JP 7005659 B2 | 21-01-2022 |
| | | JP 2020523969 A | 06-08-2020 |
| | | KR 20200017483 A | 18-02-2020 |
| | | RU 2725761 C1 | 06-07-2020 |
| | | US 2020119560 A1 | 16-04-2020 |
| | | WO 2018228917 A1 | 20-12-2018 |
| AU 2010227613 A1 | 06-10-2011 | AR 075929 A1 | 04-05-2011 |
| | | AU 2010227613 A1 | 06-10-2011 |
| | | CA 2754643 A1 | 30-09-2010 |
| | | CL 2011002340 A1 | 03-02-2012 |
| | | CN 102388219 A | 21-03-2012 |
| | | CY 1114316 T1 | 31-08-2016 |
| | | DE 102009014012 A1 | 30-09-2010 |
| | | DK 2411669 T3 | 30-09-2013 |
| | | EP 2411669 A2 | 01-02-2012 |
| | | EP 2647840 A1 | 09-10-2013 |
| | | ES 2425917 T3 | 18-10-2013 |
| | | ES 2950986 T3 | 17-10-2023 |
| | | HR P20130753 T1 | 25-10-2013 |
| | | JP 5714563 B2 | 07-05-2015 |
| | | JP 2012521513 A | 13-09-2012 |
| | | KR 20110130507 A | 05-12-2011 |
| | | KR 20140065025 A | 28-05-2014 |
| | | NZ 595162 A | 20-12-2013 |
| | | NZ 618856 A | 26-06-2015 |
| | | PL 2411669 T3 | 31-12-2013 |

Für nähere Einzelheiten zu diesem Anhang : siehe Amtsblatt des Europäischen Patentamts, Nr.12/82

EPO FORM P0461

Seite 1 von 2

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-06-2024

| Im Recherchenbericht angeführtes Patentdokument | Datum der Veröffentlichung | Mitglied(er) der Patentfamilie | | Datum der Veröffentlichung |
|---|---|---|---|---|
| | | PT | 2411669 E | 17-09-2013 |
| | | RU | 2011142739 A | 27-04-2013 |
| | | SI | 2411669 T1 | 30-09-2013 |
| | | US | 2012104756 A1 | 03-05-2012 |
| | | US | 2016169199 A1 | 16-06-2016 |
| | | WO | 2010108910 A2 | 30-09-2010 |
| DE 102018116444 A1 | 09-01-2020 | CA | 3103352 A1 | 09-01-2020 |
| | | CN | 112368899 A | 12-02-2021 |
| | | DE | 102018116444 A1 | 09-01-2020 |
| | | EP | 3818609 A1 | 12-05-2021 |
| | | US | 2021285420 A1 | 16-09-2021 |
| | | WO | 2020008034 A1 | 09-01-2020 |

EPO FORM P0461

Für nähere Einzelheiten zu diesem Anhang : siehe Amtsblatt des Europäischen Patentamts, Nr.12/82

Seite 2 von 2